(19) Europäisches Patentamt
European Patent Office
Office européen des brevets

(11) **EP 4 663 317 A1**

(12) **EUROPEAN PATENT APPLICATION**
published in accordance with Art. 153(4) EPC

(43) Date of publication:
**17.12.2025 Bulletin 2025/51**

(21) Application number: **23932677.0**

(22) Date of filing: **03.08.2023**

(51) International Patent Classification (IPC):
**B21B 1/38** $^{(2006.01)}$    **B21B 1/00** $^{(2006.01)}$
**B21B 47/02** $^{(2006.01)}$    **B21B 47/00** $^{(2006.01)}$
**B32B 15/18** $^{(2006.01)}$    **B32B 15/01** $^{(2006.01)}$
**B32B 15/00** $^{(2006.01)}$    **B21C 37/02** $^{(2006.01)}$
**B21C 37/00** $^{(2006.01)}$

(86) International application number:
**PCT/CN2023/111060**

(87) International publication number:
**WO 2024/212404 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.04.2023 CN 202310384402**

(71) Applicants:
• **Institute of Research of Iron and Steel,
Jiangsu Province/Sha-Steel, Co. Ltd (CN)**
Suzhou, Jiangsu 215625 (CN)
• **Jiangsu Shagang Steel Co., Ltd.**
Suzhou, Jiangsu 215625 (CN)
• **Jiangsu Shagang Group Co., Ltd.**
Suzhou, Jiangsu 215625 (CN)
• **Jiangsu University Of Science And Technology**
Zhenjiang, Jiangsu 212003 (CN)

(72) Inventors:
• **ZHEN, Fan**
**Suzhou, Jiangsu 215625 (CN)**
• **QU, Jinbo**
**Suzhou, Jiangsu 215625 (CN)**
• **SHAO, Chunjuan**
**Suzhou, Jiangsu 215625 (CN)**
• **LU, Chunjie**
**Suzhou, Jiangsu 215625 (CN)**
• **ZHENG, Chuanbo**
**Suzhou, Jiangsu 215625 (CN)**
• **LI, Xiaobing**
**Suzhou, Jiangsu 215625 (CN)**

(74) Representative: **Gille Hrabal
Partnerschaftsgesellschaft mbB
Patentanwälte
Brucknerstraße 20
40593 Düsseldorf (DE)**

(54) **STAINLESS STEEL COMPOSITE PLATE WITH EXCELLENT APPEARANCE, AND PREPARATION METHOD THEREFOR**

(57)    The present application discloses a stainless steel clad plate with excellent shape and a preparation method thereof. The method comprises three overall steps: composite slab preparation, composite slab rolling, and clad plate separation and straightening. In the composite slab preparation step, three times of vacuuming and two times of vacuum breaking are performed on a composite slab through a seamless steel tube, so that a vacuum degree is finally achieved to be $\leq 10^{-2}$ Pa. In the composite slab rolling step, an intermittent cooling, a straightening, and a stacked cooling between two steel plates at a temperature of $T_f-150°C \sim T_f+150°C$ are per-formed. In the clad plate separation and straightening step, a leveling is performed on a leveling machine, when performing a transverse leveling, controlling a leveling force of the leveling machine to be $F1 = v \times a \times b \times c_t \times \sigma_t / (d \times (v - c_t/a))$; when performing a longitudinal leveling, controlling a leveling force of the leveling machine to be $F2 = a \times b \times c_l \times \sigma_l / (d + c_l)$. The clad plate has an excellent shape and an excellent interface bonding quality, a flatness deviation is $\leq 3mm/m$, a clad interface bonding rate is 100%, a shear strength is $\geq 300MPa$, and a yield rate and a production efficiency are high.

EP 4 663 317 A1

Fig. 3a

**Description**

**TECHNICAL FIELD**

The present application belongs to the technical field of steel material preparation, and relates to a stainless steel clad plate with excellent shape and a preparation method thereof.

**BACKGROUND**

With the continuous development of science and industry, ordinary alloys or a single metal can hardly meet the comprehensive performance requirements of industrial development for materials, and a clad plate came into being. A stainless steel clad plate is a cladding material that combines stainless steel as a cladding layer with carbon steel or a low alloy steel as a base layer through specific process methods, featuring both the corrosion resistance of the cladding layer and good mechanical properties of the base layer. The stainless steel clad plate reduces the consumption of precious metals and significantly lowers engineering costs, achieving resource conservation and cost reduction without compromising a use effect (mechanical strength, corrosion resistance, etc.), realizing a perfect combination of low cost and high performance, with good economic and social benefits, and is widely used in petrochemical, pressure vessel, pharmaceutical equipment, papermaking, water conservancy, bridge and other industries.

A Chinese Patent Application with a publication number of CN110064835A discloses a method for manufacturing a TMCP type bridge steel stainless steel clad plate by explosive welding. In the patent application, an explosion is used for a composite between a stainless steel and a bridge steel, the explosion composite causes vibration, noise and smoke and dust pollution to an environment, and a prepared stainless steel clad plate has a poor shape and a poor interface bonding quality.

**SUMMARY**

An object of the present application is to provide a stainless steel clad plate and a preparation method thereof, wherein the stainless steel clad plate has an excellent shape and an excellent interface bonding quality.

To achieve the above inventive object, an embodiment of the present application provides a preparation method of a stainless steel clad plate, wherein the method comprises the following steps:

(1) composite slab preparation

preparing two carbon steel slabs with a thickness of T1, a length of L1, and a width of W1 as a base material; and preparing two stainless steel slabs with a thickness of T2, a length of L2<L1, and a width of W2<W1 as a cladding material;

performing surface treatment on at least one surface of each of the two base materials and two cladding materials;

applying a separating agent on one surface of one cladding material;

stacking slabs in an order of a base material, a cladding material, a cladding material, a base material; the cladding material is placed centrally relative to the base material, surfaces of the base material and the cladding material that contact each other are all surfaces subjected to the surface treatment, and surface coated with the separating agent faces another cladding material;

preparing four sealing strips with a width of W3, where W3=2T2-1~2mm, attaching the sealing strips to four side edges of the two cladding materials, performing gas shielded welding between adjacent sealing strips and between the sealing strips and the base materials to form the two base materials and sealing strips into an integral whole, obtaining a composite slab blank;

machining a circular hole on the sealing strip in a groove at the side edge of the composite slab blank, welding a seamless steel tube at the circular hole;

performing surfacing welding on the grooves at four side edges of the composite slab blank;

performing three times of vacuuming and two times of vacuum breaking on the composite slab through the seamless steel tube, finally making the vacuum degree ≤$10^{-2}$Pa; and then performing sealing treatment on the seamless steel tube to obtain a composite slab;

(2) composite slab rolling

heating the composite slab, and then performing two-stage controlled rolling of rough rolling + finish rolling;

performing cooling after rolling: the unified clad plate enters ultra-rapid cooling system for intermittent cooling; the ultra-rapid cooling system has 24 groups of cooling headers arranged at an interval of 1m along a roller table, a cooling distance of each group of cooling headers is 1m; when the unified clad plate passes through the ultra-rapid cooling system, the operation of all 24 groups of the cooling headers is controlled in a periodic pattern consisting of N consecutive activated groups followed by M consecutive deactivated groups of cooling headers repeated as necessary; a cooling water pressure is 0.15~0.30MPa, a cooling rate is 3~15°C/s, and a final cooling temperature is 380~590°C; wherein N takes a value of 2, 3 or 4, and M takes a value of 2, 3 or 4;

after exiting the ultra-rapid cooling system, the unified clad plate is directly entering straightening in a straightening machine; and then placing straightened unified clad plate between two steel plates at a temperature of $T_f-150°C \sim T_f+150°C$ for stacked cooling; a stacked cooling time is 0.4min/mm×t0±5min (t0 is a thickness of unified clad plate); the unified clad plate is air-cooled on a cooling bed until room temperature after stacked cooling; $T_f=550+30Si-20Mn+15Cr-15Ni+10Mo$, where the element symbols represent 100 times the mass percentage of the respective elements in base material;

(3) clad plate separation and straightening

cutting an edge of the unified clad plate to remove a portion outside the sealing strip, thereby separating the unified clad plate into an upper clad sub-plate and a lower clad sub-plate;

placing the sized clad sub-plate on a leveling machine with a cladding layer facing upward for a leveling; when performing a transverse leveling, controlling a leveling force of the leveling machine to be $F1=v \times a \times b \times ct \times \sigma t/(d \times (v-c_t/a))$; when performing a longitudinal leveling, controlling a leveling force of the leveling machine to be $F2= a \times b \times c_1 \times \sigma_1/(d+c_1)$; the a denotes a width of the clad sub-plate, b is a thickness of the clad sub-plate; the $c_t$ denotes a flatness deviation per meter in the transverse direction of the clad sub-plate, measured in mm; the $c_l$ denotes a flatness deviation per meter in a longitudinal direction of the clad sub-plate, measured in mm; the d denotes a working distance of the leveling machine, $\sigma_t$ denotes a tensile yield strength in the transverse direction of the clad sub-plate, $\sigma_l$ denotes a tensile yield strength in the longitudinal direction of the clad sub-plate, and v denotes a Poisson's ratio;

finally, performing a cold straightening on the clad sub-plate to obtain a single-sided stainless steel clad plate product.

Preferably, the step of "performing three times of vacuuming and two times of vacuum breaking on the composite slab through the seamless steel tube, finally making the vacuum degree ≤10-2Pa" specifically comprises:

firstly, connecting the seamless steel tube to a vacuum pump, performing vacuuming on the composite slab, wherein a vacuum degree is $\leq10^{-2}Pa$, and then maintaining the pressure for more than 4 hours; next, connecting the seamless steel tube to a nitrogen device, performing vacuum breaking on the composite slab, and filling nitrogen into the space inside the composite slab;

then, reconnecting the seamless steel tube to the vacuum pump, performing vacuuming on the composite slab, wherein a vacuum degree is $\leq10^{-1}Pa$, and not maintaining a pressure; next, reconnecting the seamless steel tube to the nitrogen device, performing vacuum breaking on the composite slab, and filling nitrogen;

finally, connecting the seamless steel tube to the vacuum pump for a third time, and performing vacuuming on the composite slab, a vacuum degree is $\leq10^{-2}Pa$.

Preferably, the step of "heating the composite slab, and then performing two-stage controlled rolling of rough rolling + finish rolling" specifically comprises:

heating the obtained composite slab, uniform heating temperature is 1150~1220°C, total heating time is $\geq$1.2min/mm×t, wherein the t is the thickness of composite slab, holding time in uniform heating section is 30min~50min;

performing two-stage controlled rolling of rough rolling + finish rolling; in rough rolling stage, a starting rolling temperature is $\leq$1050°C, a finish rolling temperature is $\geq$980°C; first transverse rolling, followed by longitudinal rolling; at least one pass in longitudinal rolling has reduction amount $\geq$35mm; a total reduction amount is 40~60%; the rough rolling stage is carried out until a thickness of an intermediate slab reaches 2.5~3.5 times the target thickness of the unified clad plate; then performing water cooling during temperature holding period, starting finish rolling stage when a surface temperature of the intermediate slab drops below 860°C; in finish rolling stage, a finish rolling temperature is $\geq$780°C, a total reduction amount is 55~75%, obtaining the unified clad plate.

Preferably, the step of "heating the composite slab, and then performing two-stage controlled rolling of rough rolling + finish rolling" specifically comprises:

heating an obtained composite slab by a five-stage heating of a preheating, a first heating, a second heating, a third heating and a soaking; wherein a preheating temperature is ≤850°C with a residence time of (0.45~0.55) min/mm×t; a first heating temperature is 1030~1090°C with a residence time of (0.35~0.45) min/mm×t; a second heating temperature is 1100~1160°C with a residence time of (0.25~0.35) min/mm×t; a third heating temperature is 1140~1180°C with a residence time of (0.15~0.25) min/mm×t; a soaking temperature is 1170~1210°C with a residence time of (0.10~0.20) min/mm×t; the t is a thickness of the composite slab;
adopting a two-stage controlled rolling of a rough rolling + a finish rolling; a first pass adopts a longitudinal rolling with a rolling reduction of ≥46 mm; transverse rolling is adopted since the second pass, until an n-th pass rolls a composite slab material to a target width of a final unified clad plate, wherein a rolling reduction of the second pass is ≥25 mm; longitudinal rolling is adopted since an (n+1)th pass, a rolling reduction of the (n+1)th pass is ≥30 mm; in a whole rough rolling stage, a rolling temperature of the first pass is ≥1060°C, a start rolling temperature of remaining passes is ≤1050°C, and a finish rolling temperature is ≥1000°C; the rough rolling stage is carried out until a thickness of an intermediate slab reaches 2.5~3.5 times the target thickness of the unified clad plate; then performing water cooling during temperature holding period, starting finish rolling stage when a surface temperature of the intermediate slab drops below 840°C.A start rolling temperature and a finish rolling temperature in the finish rolling stage is 810°C~840°C and 780°C~810°C.

Preferably, the step of "heating the composite slab, and then performing two-stage controlled rolling of rough rolling + finish rolling" specifically comprises:

heating an obtained composite slab by a four-stage heating of a preheating, a first heating, a second heating and a soaking, wherein a preheating temperature is 950~1000°C with a residence time of 0.3 min/mm×t, a first heating temperature is 1050~1100°C, a second heating temperature is 1120~1180°C, a soaking temperature is 1150~1200°C, a total residence time of the first heating, the second heating and the soaking is 1.5 min/mm×t + 20~40 min, and t is a thickness of the composite slab;
performing a high-pressure water descaling on a composite slab after the composite slab leaves a heating furnace, and then performing a rolling; during the rolling, transverse rolling is adopted since the first pass, until an n-th pass rolls a composite slab material to a width of Wt+0~40 mm, wherein Wt is a target width of a unified clad plate, and a total reduction rate up to now is ≥30%; longitudinal rolling is adopted since an (n+1)th pass, wherein a rolling reduction rate of the (n+1)th pass is ≥20%; performing water cooling during temperature holding period, when an intermediate slab has a thickness of 2.5-3.5 times of a target thickness of a unified clad plate, and when a surface temperature of the intermediate slab is reduced to be below 880°C, resuming the rolling until the rolling is ended, wherein a finish rolling temperature is $T_r \pm 20°C$, and a total reduction rate of a whole rolling process is ≥75%;

$$T_r = 855 - 150\sqrt{C} + 45Si - 15Ni + 31Mo + 106Nb + 100Ti + 70Al$$, wherein an element symbol in the formula represents 100 times of a mass percentage of each element in a base material.

Preferably, in the intermittent cooling:

when a thickness of the unified clad plate is below 54mm, a roller table speed of the ultra-rapid cooling system is 0.4~0.8m/s; 1st~4th groups of cooling headers are turned on, 5th~6th groups of cooling headers are not turned on, 7th~8th groups of cooling headers are turned on, 9th~10th groups of cooling headers are not turned on, 11th~12th groups of cooling headers are turned on, 13th~14th groups of cooling headers are not turned on, 15th~16th groups of cooling headers are turned on, 17th~18th groups of cooling headers are not turned on, 19th~20th groups of cooling headers are turned on, 21st~22nd groups of cooling headers are not turned on, and 23rd~24th groups of cooling headers are turned on; the unified clad plate passes through the ultra-rapid cooling system once, thereby the intermittent cooling is completed;
when the thickness of the unified clad plate is >54mm, the roller table speed of the ultra-rapid cooling system is above 0.2m/s and less than 0.6m/s; 1st~4th groups of cooling headers are turned on, 5th~8th groups of cooling headers are not turned on, 9th~12th groups of cooling headers are turned on, 13th~16th groups of cooling headers are not turned on, 17th~20th groups of cooling headers are turned on, 21st~22nd groups of cooling headers are not turned on, and 23rd~24th groups of cooling headers are turned on; the unified clad plate passes through the ultra-rapid cooling system once, thereby the intermittent cooling is completed.

Preferably, in the intermittent cooling:

when the thickness of the unified clad plate is ≥70mm, the roller table speed of the ultra-rapid cooling system is 0.4~0.9m/s, the unified clad plate first enters from an inlet of the ultra-rapid cooling system in a forward direction, and when a head of the unified clad plate reaches the 24th group of cooling headers, the roller table reverses, the unified clad plate passes through the ultra-rapid cooling system in a reverse direction and leaves from the inlet of the ultra-rapid cooling system, the intermittent cooling is completed;

1st~4th groups of cooling headers are turned on, 5th~8th groups of cooling headers are not turned on, 9th~12th groups of cooling headers are turned on, 13th~16th groups of cooling headers are not turned on, 17th~20th groups of cooling headers are turned on, 21st~22nd groups of cooling headers are not turned on, and 23rd~24th groups of cooling headers are turned on.

Preferably, in the step of "placing straightened unified clad plate between two steel plates at a temperature of $T_f$-150°C~$T_f$+150°C for stacked cooling", a length and a width of the used steel plates are both larger than a length and a width of the unified clad plate, and a thickness of the used steel plates is two times of a thickness of the unified clad plate.

Preferably, in the step of "applying a separating agent on one surface of one cladding material", the separating agent is a coating liquid containing silicon oxide and magnesium oxide, with a mass ratio of 3:1;

the amount of separating agent applied is $20y$ mg/m$^2$, where y is the ratio of the thickness of the composite slab to the thickness of the unified clad plate;

before the step of "stacking slabs in an order of a base material, a cladding material, a cladding material, a base material", the cladding material applied with separating agent is placed in a car furnace for heating and drying, with a drying temperature of 340~360°C and drying time of 35~45min.

Preferably, in the step of "applying a separating agent on one surface of one cladding material ", the composition of the separating agent by weight ratio is: 25~35% silicon nitride, 5~10% thermosetting amino resin, 55~70% water;

the thickness of the applied separating agent is 0.2~0.5mm;

before the step of "stacking slabs in an order of a base material, a cladding material, a cladding material, a base material", the cladding material applied with separating agent is heated and dried at a temperature of 100~250°C for 20~40min.

Preferably, the step of "performing surface treatment on at least one surface of each of the two base materials and two cladding materials" comprises:

in a relatively complementary shape manner, performing milling and grinding processing on one surface of the two base materials, processing the surface into an irregular concave-convex surface containing X planes successively connected in the transverse direction, the base material being a non-uniform thickness slab with non-monotonic thickness variation in the transverse direction, wherein the irregular concave-convex surface has a length of L12=L1 and a total width of W12>W1; or, processing the surface into an irregular concave-convex surface containing X planes successively connected in the longitudinal direction, the base material being a non-uniform thickness slab with non-monotonic thickness variation in the longitudinal direction, wherein the irregular concave-convex surface has a total length of L12>L1 and a width of W12=W1; X≥2;

performing grinding and polishing on one surface of each cladding material to remove surface oxide scale; and then bending each cladding material to match the corresponding irregular concave-convex surface.

Preferably, the step of "performing surface treatment on at least one surface of each of the two base materials and two cladding materials" comprises:

performing grinding and polishing on one surface of each cladding material to remove surface oxide scale; and in a relatively complementary shape manner, performing milling and grinding processing on one surface of the two base materials, processing the surface into a transverse inclined surface with a length of L11=L1 and a width of W11>W1, the base material being a non-uniform thickness slab with gradually varying thickness in the transverse direction, or processing the surface into a longitudinal inclined surface with a length of L11>L1 and a width of W11=W1, the base material being a non-uniform thickness slab with gradually varying thickness in the longitudinal direction.

Preferably, the step of "performing surface treatment on at least one surface of each of the two base materials and two cladding materials" comprises:

performing grinding and polishing on one surface of each base material and each cladding material to remove surface oxide scale, after grinding and polishing, both the base materials and cladding materials are uniform thickness slabs.

Preferably, in the "the cladding material is placed centrally relative to the base material", the distance from the side edge of the cladding material to the corresponding side edge of the base material in the transverse direction is half of the width difference between the contact surfaces of the cladding material and base material, and the distance from the side edge of the cladding material to the corresponding side edge of the base material in the longitudinal direction is half of the length difference between the contact surfaces of the cladding material and base material.

To achieve the above inventive object, an embodiment of the present application provides a stainless steel clad plate with excellent shape, the clad plate is prepared by the preparation method.

Preferably, the flatness deviation of the clad plate is ≤3mm/m, the bonding ratio of the clad interface is 100%, and the shear strength is ≥300MPa.

Preferably, the flatness deviation of the clad plate is ≤2mm/m, and the shear strength is ≥360MPa.

Preferably, the impact energy at 0°C is ≥240J, the impact energy at -20°C is ≥200J, and the impact energy at -40°C is ≥150J.

Preferably, the Vickers hardness difference in the thickness direction of the base layer of the clad plate is ≤10, the strength difference between the head, middle and tail is ≤40MPa, and the strength difference across the entire plate is ≤40MPa.

Compared with the prior art, beneficial effects of the present application are: on one hand, through specific process control throughout the preparation method, the corrosion resistance and mechanical strength of the stainless steel clad plate are ensured, avoiding deterioration of corrosion resistance and mechanical properties during the rolling process of the composite slab; on the other hand, it solves the problems of poor shape, poor interface bonding quality, and poor surface quality of existing thick stainless steel clad plates, making the stainless steel clad plate have excellent shape and interface bonding quality, wherein the flatness deviation of the clad plate is ≤3mm/m, the bonding ratio of the clad interface is 100%, and the shear strength is ≥300MPa, and it avoids obvious surface defects such as pits and scratches brought by existing explosive bonding technology; furthermore, the production process has high yield and high production efficiency.

## BRIEF DESCRIPTION OF THE DRAWINGS

For clear demonstration and explanation, in each figure of the present application, certain dimensions of structures or parts may be enlarged relative to other structures or parts, therefore, they are only used to illustrate the basic structure of the subject matter of the present application.

Figure 1a is a cross-sectional view of the slab in the first embodiment of the slab surface treatment step in the present application;

Figure 1b is a transverse cross-sectional view of the slab in the second embodiment of the slab surface treatment step in the present application, wherein the surface shape change after surface treatment is indicated by dash-dot lines;

Figure 1c is a longitudinal cross-sectional view of the slab in the third embodiment of the slab surface treatment step in the present application, wherein the surface shape change after surface treatment is indicated by dash-dot lines;

Figure 1d is a transverse cross-sectional view of the slab in the fourth embodiment of the slab surface treatment step in the present application, showing the surface shape changes before (A) and after (B) surface treatment;

Figure 1e is a longitudinal cross-sectional view of the slab in the fifth embodiment of the slab surface treatment step in the present application, showing the surface shape changes before (A) and after (B) surface treatment;

Figure 2a is a cross-sectional view of the composite slab corresponding to Figure 1a;

Figure 2b is a transverse cross-sectional view of the composite slab corresponding to Figure 1b;

Figure 2c is a longitudinal cross-sectional view of the composite slab corresponding to Figure 1c;

Figure 2d is a transverse cross-sectional view of the composite slab corresponding to Figure 1d;

Figure 2e is a longitudinal cross-sectional view of the composite slab corresponding to Figure 1e;

Figure 3a is a flow chart of the first embodiment of the overall composite slab rolling steps in the present application;

Figure 3b is a flow chart of the second embodiment of the overall composite slab rolling steps in the present application;

Figure 3c is a flow chart of the third embodiment of the overall composite slab rolling steps in the present application;

Figure 4a is a cross-sectional view of two clad plates rolled from the composite slab of Figure 2a;

Figure 4b is a transverse cross-sectional view of two clad plates rolled from the composite slab of Figure 2b;

Figure 4c is a longitudinal cross-sectional view of two clad plates rolled from the composite slab of Figure 2c;

Figure 4d is a transverse cross-sectional view of two clad plates rolled from the composite slab of Figure 2d;

Figure 4e is a longitudinal cross-sectional view of two clad plates rolled from the composite slab of Figure 2e.

## DETAILED DESCRIPTION

As mentioned in the background, due to preparation process reasons, existing stainless steel clad plates have problems of poor shape and poor interface bonding quality. To solve this technical problem, the present application provides a preparation method for a single-sided stainless steel clad plate with excellent shape, and a single-sided stainless steel clad plate prepared based on this method.

Specifically, the preparation method includes three overall steps: composite slab preparation, composite slab rolling, and clad plate separation and straightening. Below, these three steps will be introduced one by one.

The overall steps of the composite slab preparation include the following sub-steps:

preparing two carbon steel slabs with a thickness of T1, a length of L1, and a width of W1 as a base material; and preparing two stainless steel slabs with a thickness of T2, a length of L2, and a width of W2 as a cladding material; performing surface treatment on at least one surface of each of the two base materials and two cladding materials; applying a separating agent on one surface of one cladding material;

stacking slabs in an order of a base material, a cladding material, a cladding material, a base material;

preparing four sealing strips with a width of W3, where W3=2T2-1~2mm, attaching the sealing strips to four side edges of the two cladding materials, performing gas shielded welding between adjacent sealing strips and between the sealing strips and the base materials to form the two base materials and sealing strips into an integral whole, obtaining a composite slab blank;

machining a circular hole on the sealing strip in a groove at the side edge of the composite slab blank, welding a seamless steel tube at the circular hole;

performing surfacing welding on the grooves at four side edges of the composite slab blank;

performing three times of vacuuming and two times of vacuum breaking on the composite slab through the seamless steel tube, finally making the vacuum degree $\leq 10^{-2}$Pa; and then performing sealing treatment on the seamless steel tube to obtain a composite slab.

Further, detailed explanations of the above sub-steps are as follows.

The step of "preparing two carbon steel slabs with a thickness of T1, a length of L1 and a width of W1 as a base material; and preparing two stainless steel slabs with a thickness of T2, a length of L2 and a width of W2 as a cladding material", namely the slab preparation step.

Wherein, the carbon steel slabs as the base material, with thickness of T1, length of L1, and width of W1, are rectangular slabs; similarly, the stainless steel slabs as the cladding material, with thickness of T2, length of L2, and width of W2, are also rectangular slabs.

Moreover, L2<L1, W2<W1, the length and width dimensions of the cladding material are both smaller than those of the base material. Preferably, L2=L1-L0, W2=W1-WO, where the preferred ranges for L0 and WO are 90~150mm respectively.

As a preferred embodiment, the surface oxide scale impression depth and surface pit depth of the carbon steel slabs are both $\leq$0.3mm, with flatness deviation $\leq$3mm/m; the stainless steel slabs have no scratches on the surface, with flatness deviation <2mm/m. This avoids slabs with obvious surface defects or shape defects entering the clad plate production line.

As a preferred embodiment, the stainless steel slabs are preferably austenitic stainless steel. Its chemical composition by mass percentage is: C$\leq$0.15%, Si$\leq$1.00%, Mn$\leq$2.00%, P$\leq$0.045%, S$\leq$0.030%, Ni: 6.0~22.0%, Cr: 16.0~26.0%, Mo$\leq$3.0%, the remainder being Fe and unavoidable impurities. Using stainless steel slabs with this chemical composition can further ensure the performance of the clad plate under the aforementioned technical effects, especially the corrosion resistance of the clad layer, for example, the cladding layer (i.e., obtained from the cladding material after rolling) of the obtained clad plate shows no intergranular corrosion cracks after being boiled in sulfuric acid-copper sulfate solution for 20h and subjected to 180° bending.

It should be noted here that the chemical compositions of the two stainless steel slabs can be the same or different, either one of them can adopt the chemical composition provided in the above preferred embodiment, or both can adopt or not adopt the chemical composition provided in the above preferred embodiment.

As a preferred embodiment, the chemical composition of the carbon steel slabs by mass percentage is: C: 0.03~0.16%, Si: 0.11~0.29%, Mn: 1.31~1.54%, P$\leq$0.018%, S$\leq$0.0030%, Cr: 0.06~0.29%, Nb: 0.011~0.034%, Ti: 0.011~0.019%, Al: 0.030~0.040%, the remainder being Fe and unavoidable impurities.

Further preferably, the chemical composition of the carbon steel slabs by mass percentage is: C: 0.08~0.12%, Si: 0.16~0.24%, Mn: 1.36~1.44%, P$\leq$0.015%, S$\leq$0.0025%, Cr: 0.11~0.19%, Ni: 0.06~0.14%, Nb: 0.016~0.024%, Ti: 0.011~0.019%, Al: 0.030~0.040%, the remainder being Fe and unavoidable impurities.

More preferably, the chemical composition of the carbon steel slabs by mass percentage is: C: 0.05~0.09%, Si: 0.14~0.22%, Mn: 1.41~1.49%, P$\leq$0.012%, S$\leq$0.0020%, Cr: 0.16~0.24%, Ni: 0.11~0.19%, Mo: 0.11~0.19%, Nb: 0.021~0.029%, Ti: 0.011~0.019%, Al: 0.030~0.040%, the remainder being Fe and unavoidable impurities.

Alternatively preferably, the chemical composition of the carbon steel slabs by mass percentage is: C: 0.03~0.07%, Si: 0.11~0.19%, Mn: 1.46~1.54%, P$\leq$0.010%, S$\leq$0.0015%, Cr: 0.21~0.29%, Ni: 0.16~0.24%, Cu: 0.16~0.24%, Mo: 0.16~0.24%, Nb: 0.026~0.034%, Ti: 0.011~0.019%, Al: 0.030~0.040%, the remainder being Fe and unavoidable impurities.

Similar to the explanation of the aforementioned stainless steel slabs, the chemical compositions of the two carbon steel slabs can be the same or different, either one of the two carbon steel slabs can adopt the chemical composition provided in the above preferred embodiment, or both can adopt or not adopt the chemical composition provided in the above preferred embodiment.

Next, the step of "performing surface treatment on at least one surface of each of the two base materials and two cladding materials", namely the slab surface treatment step. The present application provides five preferred embodiments, which will be introduced respectively below.

<First Embodiment of Slab Surface Treatment Step>

In this embodiment, one surface of each base material and each cladding material is ground and polished to remove surface oxide scale and expose metallic luster. Thus, after grinding and polishing, both the base materials and cladding materials are uniform thickness slabs.

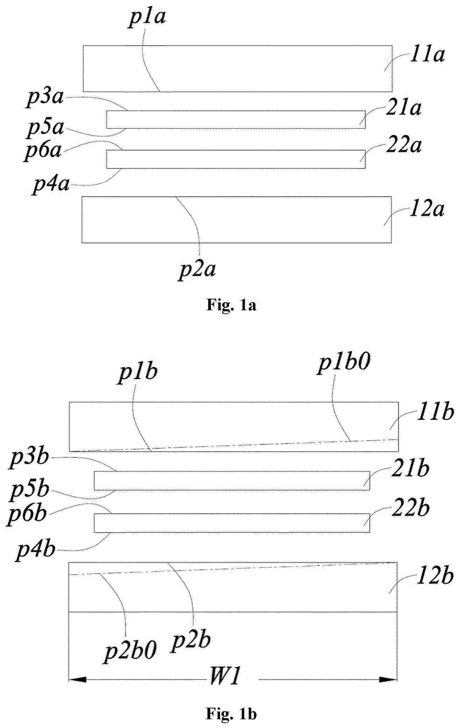

As shown in Figure 1a, for example, for surface **p1a** of base material 11a and surface **p2a** of base material 12a, grinding wheels, belt sanders or milling machines are used for grinding and polishing to remove surface oxide scale and expose metallic luster. For surface **p3a** of prepared cladding material 21a and surface **p4a** of cladding material 22a, wire wheels are used for grinding and polishing to remove surface oxide scale and expose metallic luster.

Combining with the following content, during slab stacking, by using the surfaces that have undergone surface treatment (grinding and polishing in this embodiment) as the contact surfaces between base materials and cladding materials, for example, surface **p1a** contacts surface **p3a,** and surface **p4a** contacts surface **p2a,** thus ensuring interface bonding quality.

<Second Embodiment of Slab Surface Treatment Step>

In this embodiment, similar to the first embodiment, one surface of each cladding material (for example, surface **p3b** of cladding material 21b and surface **p4b** of cladding material 22b in Figure 1b) is ground and polished to remove surface oxide scale and expose metallic luster, which will not be repeated here.

Different from the first embodiment, this embodiment features different surface treatment for base materials: As shown in Figure 1b, surface **p1b** of base material 11b is processed by milling and grinding to form surface **p1b0**, which is a transverse inclined surface with length of L11=L1 and width of W11>W1. Correspondingly, base material 11b is processed into a non-uniform thickness slab with gradually varying thickness in the transverse direction (i.e., width direction), meaning that after milling and grinding, the height of base material 11b gradually increases from one side edge to the other side edge in the width direction; similarly, surface **p2b** of base material 12b is processed by milling and grinding to form surface **p2b0,** which is a transverse inclined surface with length of L11=L1 and width of W11>W1. Correspondingly, base material 12b is processed into a non-uniform thickness slab with gradually varying thickness in the transverse direction.

When processing surface **p2b** of base material 12b and surface **p1b** of base material 11b by milling and grinding, they are processed in a relatively complementary shape manner, meaning that the processed surfaces **p2b0** and **p1b0** are complementary in shape when facing each other. For example, the transverse inclination angle of surface **p2b0** (e.g., the angle with original surface **p2b)** equals the transverse inclination angle of surface **p1b0** (e.g., the angle with original surface **p1b**), thereby ensuring parallel upper and lower surfaces of the composite slab during subsequent stacking.

It can be understood that through the above milling and grinding process, the surface oxide scale on surface **p1b** of base material 11b and surface **p2b** of base material 12b can also be removed, exposing metallic luster.

Combining with the following content, during slab stacking, the surfaces subjected to surface treatment (milling and grinding in this embodiment) are arranged as the contact surfaces between base materials and cladding materials, for example, surface **p1b0** contacts surface **p3b,** and surface **p4b** contacts surface **p2b0,** this can ensure interface bonding quality like the first embodiment, and this embodiment can further be used to prepare non-uniform thickness clad plates with gradually varying thickness in the transverse direction, thus expanding the application scenarios and scope of the clad plates.

<Third Embodiment of Slab Surface Treatment Step>

This embodiment is basically the same as the second embodiment (including surface treatment of surfaces **p3c** and **p4c),** with the only difference being: the gradually varying thickness changes from the transverse direction in the second embodiment to the longitudinal direction (i.e., length direction) in this embodiment. The differences will be introduced below, while other similar points can be referred to in the second embodiment and will not be repeated.

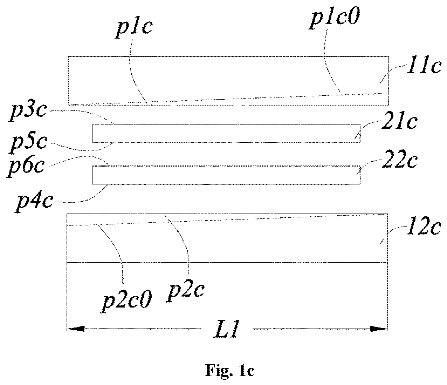

As shown in Figure 1c, surface **p1c** of base material 11c is processed by milling and grinding to form surface **p1c0**, which is a longitudinal inclined surface with length of L11>L1 and width of W11=W1. Correspondingly, base material 11c is processed into a non-uniform thickness slab with gradually varying thickness in the longitudinal direction. Similarly, surface **p2c** of base material 12c is processed by milling and grinding to form surface **p2c0,** which is a longitudinal inclined surface with length of L11>L1 and width of W11=W1. Correspondingly, base material 12c is processed into a non-uniform thickness slab with gradually varying thickness in the longitudinal direction.

When processing surface **p2c** of base material 12c and surface **p1c** of base material 11c by milling and grinding, they are processed in a relatively complementary shape manner. For example, the longitudinal inclination angle of surface **p2c0** (e.g., the angle with original surface **p2c)** equals the longitudinal inclination angle of surface **p1c0** (e.g., the angle with original surface **plc),** thereby ensuring parallel upper and lower surfaces of the composite slab during subsequent stacking.

<Fourth Embodiment of Slab Surface Treatment Step>

In this embodiment, one surface of each base material is processed by milling and grinding to form an irregular concave-convex surface containing X planes successively connected in the transverse direction, the base material being a non-uniform thickness slab with non-monotonic thickness variation in the transverse direction, wherein the irregular surface has a length of L12=L1 and a total width of W12>W1.

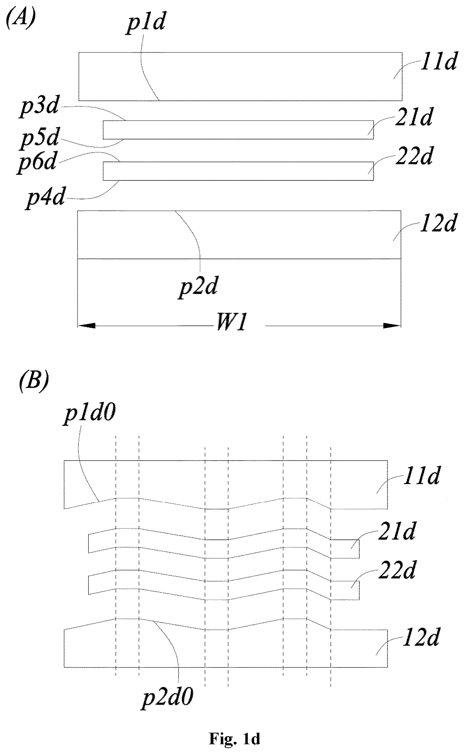

For example, as shown in Figure 1d, surface **p1d** of base material 11d is processed by milling and grinding, transforming surface **p1d** from the horizontal surface in Figure 1d(A) to the irregular concave-convex surface **p1d0** shown in Figure 1d(B). This irregular concave-convex surface **p1d0** specifically contains X planes successively connected in the transverse direction, where X≥2, shown in the figure as 8 planes. As can be seen from the figure, the 1st, 3rd, 5th, and 7th planes from left to right are transverse inclined surfaces, while the 2nd, 4th, 6th, and 8th are horizontal planes. Of course, this is just an example, and it can be varied to implement X with other numbers, or include only transverse inclined surfaces without horizontal planes, etc.

As shown in Figure 1d, through milling and grinding of surface **pld,** base material 11d is processed into a non-uniform thickness slab with non-monotonic thickness variation in the transverse direction.

The length of L12 of irregular concave-convex surface **p1d0** equals L1, meaning it hasn't changed due to milling and grinding; while the total width of W12 of irregular concave-convex surface **p1d0** is greater than W1, understandably, this total width of W12 is the sum of the widths of X planes.

Correspondingly, as shown in Figure 1d, surface **p2d** of base material 12d is also processed by milling and grinding, transforming surface **p2d** from the horizontal surface in Figure 1d(A) to the irregular concave-convex surface **p2d0** shown in Figure 1d(B). When processing surface **p2d** of base material 12d and surface **p1d** of base material 11d by milling and grinding, they are processed in a relatively complementary shape manner, meaning that the processed surfaces **p2d0** and **p1d0** are complementary in shape when facing each other.

Following the relatively complementary shape, this irregular concave-convex surface **p2d0** also specifically contains X planes successively connected in the transverse direction, shown in the figure as 8 planes. The length of L12 of irregular concave-convex surface **p2d0** equals L1, meaning it hasn't changed due to milling and grinding; while the total width of W12 of irregular concave-convex surface **p2d0 is** greater than W1, understandably, this total width of W12 is the sum of the widths of X planes of irregular concave-convex surface **p2d0.**

As shown in Figure 1d, through milling and grinding of surface **p2d,** base material 12d is processed into a non-uniform thickness slab with non-monotonic thickness variation in the transverse direction. Based on the complementary shapes of irregular concave-convex surfaces **p2d0** and **p1d0,** when the processed base materials 12d and 11d are placed facing each other, the sum of their thicknesses at each position remains constant. Thus, during subsequent stacking, the upper and lower surfaces of the composite slab are parallel.

Having introduced the surface treatment of the two base materials in this embodiment, the surface treatment of the two cladding materials will now be introduced.

In this embodiment, for surface **p3d** of prepared cladding material 21d, a wire wheel is used for grinding and polishing to remove surface oxide scale and expose metallic luster; similarly, for surface **p4d** of prepared cladding material 22d, a wire wheel is used for grinding and polishing to remove surface oxide scale and expose metallic luster.

Furthermore, matching the surface shapes of base materials 11d and 12d, after removing surface oxide scale, this embodiment also bends each cladding material to match the corresponding irregular concave-convex surface. For example, cladding material 21d is bent to match the corresponding irregular concave-convex surface **p1d0** for better contact during subsequent stacking; similarly, cladding material 22d is bent to match the corresponding irregular concave-convex surface **p2d0** for better contact during subsequent stacking.

The surface treatment in this embodiment can ensure interface bonding quality like the first embodiment, and can further be used to prepare non-uniform thickness clad plates with non-monotonic thickness variation in the transverse direction, thus expanding the application scenarios and scope of the clad plates, enhancing corrosion resistance compared to existing steel plates, and avoiding frequent welding and dissimilar welding between clad plates of different thicknesses.

<Fifth Embodiment of Slab Surface Treatment Step>

The difference between this embodiment and the fourth embodiment is: the non-monotonic thickness variation changes from the transverse direction in the fourth embodiment to the longitudinal direction in this embodiment.

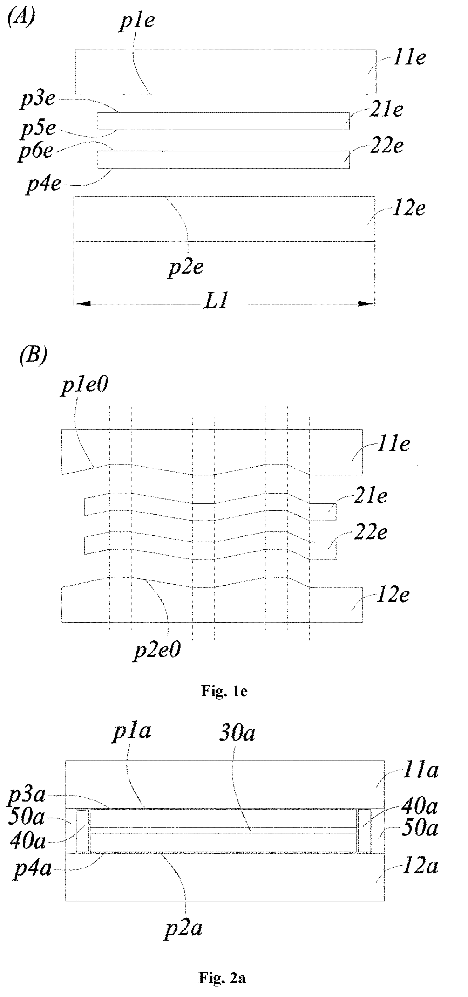

For example, as shown in Figure 1e, surface **p1e** of base material 11e is processed by milling and grinding, transforming surface **p1e** from the horizontal surface in Figure 1e(A) to the irregular concave-convex surface **p1e0** shown in Figure 1e(B). This irregular concave-convex surface **p1e0** specifically contains X planes successively connected in the longitudinal direction, where X≥2, shown in the figure as 8 planes. As can be seen from the figure, the 1st, 3rd, 5th, and 7th planes from left to right are longitudinal inclined surfaces, while the 2nd, 4th, 6th, and 8th are horizontal planes. Of course, this is just an example, and it can be varied to implement X with other numbers, or include only longitudinal inclined surfaces without horizontal planes, etc.

As shown in Figure 1e, through milling and grinding of surface **p1e,** base material 11e is processed into a non-uniform thickness slab with non-monotonic thickness variation in the longitudinal direction.

The width of W12 of irregular concave-convex surface **p1e0** equals W1, meaning it hasn't changed due to milling and grinding; while the total length of L12 of irregular concave-convex surface **p1e0** is greater than L1, understandably, this total length of L12 is the sum of the lengths of X planes.

Correspondingly, as shown in Figure 1e, surface **p2e** of base material 12e is also processed by milling and grinding, transforming surface **p2e** from the horizontal surface in Figure 1e(A) to the irregular concave-convex surface **p2e0** shown in Figure 1e(B). When processing surface **p2e** of base material 12e and surface **p1e** of base material 11e by milling and grinding, they are processed in a relatively complementary shape manner, meaning that the processed surfaces **p2e0** and **p1e0** are complementary in shape when facing each other.

Following the relatively complementary shape, this irregular concave-convex surface **p2e0** also specifically contains X planes successively connected in the longitudinal direction, shown in the figure as 8 planes. The width of W12 of irregular concave-convex surface **p2e0** equals W1, with a total length of L12>L1.

As shown in Figure 1e, through milling and grinding of surface **p2e,** base material 12e is processed into a non-uniform thickness slab with non-monotonic thickness variation in the longitudinal direction. Based on the complementary shapes of irregular concave-convex surfaces **p2e0** and **p1e0**, when the processed base materials 12e and 11e are placed facing each other, the sum of their thicknesses at each position remains constant. Thus, during subsequent stacking, the upper and lower surfaces of the composite slab are parallel.

Having introduced the surface treatment of the two base materials in this embodiment, the surface treatment of the two cladding materials will now be introduced.

In this embodiment, for surface **p3e** of prepared cladding material 21e, a wire wheel is used for grinding and polishing to remove surface oxide scale and expose metallic luster; similarly, for surface **p4e** of prepared cladding material 22e, a wire wheel is used for grinding and polishing to remove surface oxide scale and expose metallic luster.

Furthermore, matching the surface shapes of base materials 11e and 12e, after removing surface oxide scale, this embodiment also bends each cladding material to match the corresponding irregular concave-convex surface. For example, cladding material 21e is bent to match the corresponding irregular concave-convex surface **p1e0** for better contact during subsequent stacking; similarly, cladding material 22e is bent to match the corresponding irregular concave-convex surface **p2e0** for better contact during subsequent stacking.

Similar to the fourth embodiment, this embodiment can also expand the application scenarios and scope of the clad plates, enhance corrosion resistance compared to existing steel plates, and avoid frequent welding and dissimilar welding between clad plates of different thicknesses.

Above, five preferred embodiments of the slab surface treatment sub-step in the composite slab preparation overall step have been introduced. Although only surface treatment of one surface of each base material and cladding material has been described, it should be noted that in any of the five embodiments, oxide scale removal treatment can be further performed on other surfaces of each base material and cladding material. Although this additional oxide scale removal treatment is not essential for achieving the technical effects of the present application, it may be more advantageous; for example, in addition to removing oxide scale from the surface of the base material facing the cladding material, oxide scale can also be removed from the surface of the base material away from the cladding material (i.e., the surface of the clad plate).

Next, other sub-steps of the composite slab preparation overall step will be introduced.

The step of "applying a separating agent on one surface of one cladding material", namely the separating agent application step.

Combining with the above, in the previous slab surface treatment step, surface treatment such as grinding and polishing was performed on the surfaces of cladding materials that will contact the base materials during stacking slabs to ensure the interface bonding quality of the clad plate; while the purpose of this separating agent application step is to use the separating agent to prevent the surfaces of two cladding materials that contact each other during stacking from bonding during the subsequent composite slab rolling overall step, which would make final separation difficult.

Based on this, a separating agent is applied to either one of the two cladding materials. If the selected cladding material, in the previous slab surface treatment step, had one surface treated and the other untreated, then in this separating agent application step, the separating agent is applied to the "untreated" surface. If, as mentioned earlier, both surfaces of the selected cladding material were treated in the previous slab surface treatment step, then in this separating agent application step, the separating agent is applied to the surface planned to face the other cladding material during stacking. For example, using Figure 1a as an example, the separating agent can be applied to surface **p6a** of cladding material 22a or surface **p5a** of cladding material 21a.

Regarding the separating agent, two preferred embodiments are provided here, which will be introduced respectively.

<First Embodiment of Separating Agent>

In this embodiment, the separating agent is a coating liquid containing silicon oxide and magnesium oxide, with a mass ratio of 3:1. The separating agent in this embodiment can achieve excellent separation effect, ensuring the subsequent separation of two clad sub-plates.

Here, a preparation method for the separating agent is provided: mixing separating agent powder, binding agent powder and water in a mass ratio of 27:3:70 to obtain a fluid separating agent coating liquid. The separating agent powder consists of silicon oxide and magnesium oxide mixed in a mass ratio of 3:1. The binding agent powder consists of polyvinyl alcohol and thermosetting phenolic resin mixed in a mass ratio of 1:1.

When applying the separating agent on the surface of the cladding material, the amount applied is $20y$ mg/m$^2$, meaning the weight of separating agent per unit area on the surface of the cladding material is $20y$ mg. Here, $y$ is the ratio of the thickness of the composite slab obtained in the composite slab preparation overall step to the thickness of the subsequently rolled unified clad plateunified clad plate, also known as the compression ratio of composite slab rolling.

Furthermore, based on this embodiment, after applying the separating agent and before subsequent stacking slabs (i.e., before the step of "stacking slabs in an order of a base material, a cladding material, a cladding material, a base material"), the cladding material applied with separating agent is placed in a car furnace for heating and drying, with a drying temperature of 340~360°C and drying time of 35~45min.

<Second Embodiment of Separating Agent>

In this embodiment, the composition of the separating agent by weight ratio is: 25~35% silicon nitride, 5~10% thermosetting amino resin, 55~70% water. Compared to existing separating agents, and even the first embodiment of separating agent mentioned above, the separating agent in this embodiment not only achieves excellent separation effect, ensuring the subsequent separation of two clad sub-plates, but also features strong chemical stability and high temperature resistance of the effective component silicon nitride, while the binding agent thermosetting amino resin can cure at low temperatures, is non-toxic, and achieves strong binding effect with small amounts, therefore overall it is low in cost, simple to operate, with good separation and adhesion effects.

Here, a preferred preparation method for the separating agent is provided, including: first placing 5~10% silicon nitride (by weight percentage) in a container such as a beaker, then pouring in 15~25% water for stirring; after silicon nitride shows no particle feeling and no bubbles, adding 2~3% thermosetting amino resin and continuing stirring; when it becomes viscous, adding the remaining silicon nitride and water, stirring for 3~5min before adding the remaining thermosetting amino resin; when stirred to a viscous state, the separating agent is prepared.

When applying this separating agent on the surface of the cladding material, the thickness of application is 0.2~0.5mm.

Furthermore, based on this embodiment, after applying the separating agent and before subsequent stacking slabs, the cladding material applied with separating agent is heated and dried at a temperature of 100~250°C for 20~40min.

Next, after completing the separating agent application step, the step of "stacking slabs in an order of a base material, a cladding material, a cladding material, a base material" will be introduced.

The step of "stacking slabs in an order of a base material, a cladding material, a cladding material, a base material", namely the stacking slabs step. In addition to following the stacking order of a base material, a cladding material, a cladding material, a base material, the following requirements may also be met.

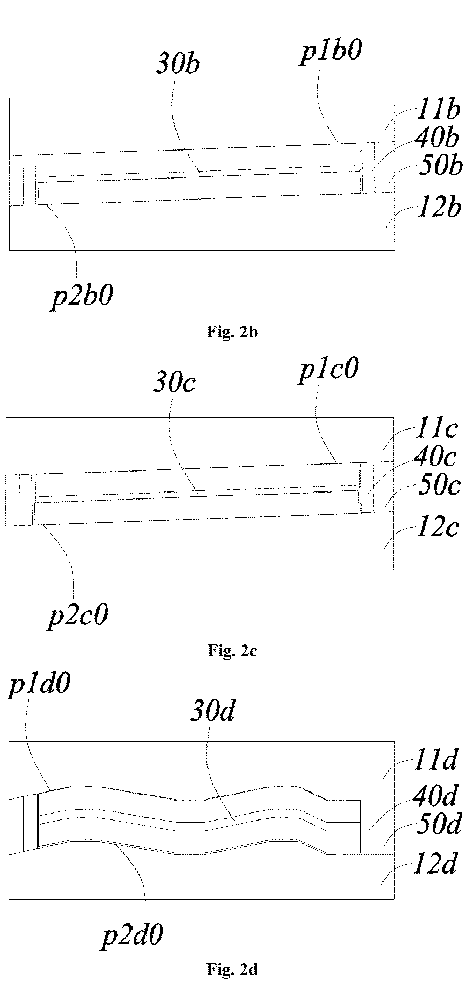

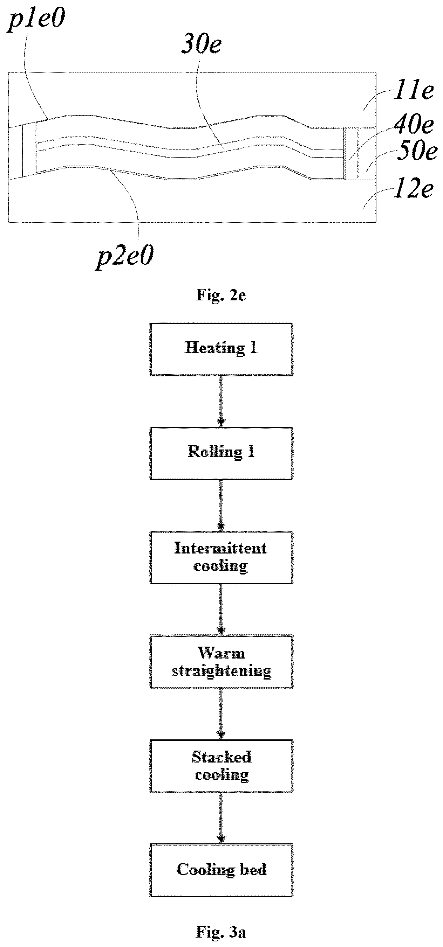

(1) Surfaces of a base material and a cladding material that contact each other are all surfaces subjected to the surface treatment. For example, in the first embodiment of the slab surface treatment step described above, as shown in FIG. 2a, a surface **p2a** of a base material 12a and a surface **p4a** of a cladding material 22a contact each other, and a surface **p1a** of a base material 11a and a surface **p3a** of a cladding material 21a contact each other. In the second embodiment of the slab surface treatment step described above, as shown in FIG. 2b, a surface **p1b0** and a surface **p3b** contact each other, and a surface **p4b** and a surface **p2b0** contact each other. In the third embodiment of the slab surface treatment step described above, as shown in FIG. 2c, a surface **p1c** of a base material 11c and a surface **p3c** of a cladding material 21c contact each other, and a surface **p2c** of a base material 12c and a surface **p4c** of a cladding material 22c contact each other. In the fourth embodiment of the slab surface treatment step described above, as shown in FIG. 2d, an irregular concave-convex surface **p1d0** and a surface **p3d** of a cladding material 21d contact each other, and an irregular concave-convex surface **p2d0** and a surface **p4d** of a cladding material 22d contact each other. And in the fifth embodiment of the slab surface treatment step described above, as shown in FIG. 2e, an irregular concave-convex surface **ple0** and a surface **p3e** of a cladding material 21e contact each other, and an irregular concave-convex surface **p2e0** and a surface **p4e** of a cladding material 22e contact each other.

(2) Surface coated with a separating agent faces another cladding material. For example, as shown in FIG. 2a, one of a surface **p6a** and a surface **p5a** is coated with a separating agent 30a. As shown in FIG. 2b, one of a surface p6b and a surface p5b is coated with a separating agent 30b. As shown in FIG. 2c, one of a surface p6c and a surface p5c is coated with a separating agent 30c. As shown in FIG. 2d, one of a surface p6d and a surface p5d is coated with a separating agent 30d. As shown in FIG. 2e, one of a surface p6e and a surface p5e is coated with a separating agent 30e. Here, it should be noted that, in FIGS. 2a to 2e, for a convenient understanding and description, a thickness dimension of a separating agent between two cladding materials (for example, reference numerals 30a, 30b, 30c, 30d and 30e in FIGS. 2a to 2e) is shown in an enlarged manner, that is, a ratio of a thickness of a separating agent to a thickness of a base material, a thickness of a cladding material, and a width of a sealing strip mentioned later shown in the figures is enlarged.

(3) A cladding material is placed centrally relative to a base material. For this, it is described above that both length and width dimensions of the cladding material are smaller than length and width dimensions of the base material, L2<L1, W2<W1. During stacking slabs, the distance from two side edges in a transverse direction of the cladding material to corresponding two side edges of the base material is equal, the distance from two side edges in a longitudinal direction of the cladding material to corresponding two side edges of the base material is also equal.

Hereinafter, the point 3 is described for the five embodiments of the slab surface treatment step described above, respectively. And, since a composite slab is disposed substantially symmetrically up and down, only a group of a base material + a cladding material in the composite slab is taken as an example for description, for example, a group on an upper side.

For the first embodiment of the slab surface treatment step described above, as shown in FIG. 2a, a surface **p1a** of a base material 11a has a length of L1 and a width of W1, a surface **p3a** of a cladding material 21a has a length of L2 and a width of W2. L2=L1-L0, W2=W1-WO, and preferred value ranges of L0 and WO are 90~150 mm, respectively. In a slab stacking state, a distance from a side edge in the transverse direction of the cladding material 21a (corresponding to a long edge of the surface **p3a**) to a side edge in the transverse direction of the base material 11a (corresponding to a long edge of the surface **p1a**) is a half of WO. And a distance from a side edge in a longitudinal direction of the cladding material 21a (corresponding to a short edge of the surface **p3a**) to a side edge in a longitudinal direction of the base material 11a (corresponding to a short edge of the surface **p1a**) is a half of L0.

For the second embodiment of the slab surface treatment step described above, as shown in FIG. 2b, a surface **p1b0** of a base material 11b has a length of L11 and a width of W11, a surface **p3b** of a cladding material 21b has a length of L2 and a width of W2. L2=L11-L0, W2=W11-WO, and preferred value ranges of L0 and WO are 90~150 mm, respectively. In a slab stacking state, a distance from a side edge in the transverse direction of the cladding material 21b (corresponding to a long edge of the surface **p3b**) to a side edge in the transverse direction of the base material 11b (corresponding to a long edge of the surface **p1b0**) is a half of WO. And a distance from a side edge in a longitudinal direction of the cladding material 21b (corresponding to a short edge of the surface **p3b**) to a side edge in a longitudinal direction of the base material 11b (corresponding to a short edge of the surface **p1b0**) is a half of L0.

For the third embodiment of the slab surface treatment step described above, as shown in FIG. 2c, a surface **p1c0** of a base material 11c has a length of L11 and a width of W11, a surface **p3c** of a cladding material 21c has a length of L2 and a width of W2. L2=L11-L0, W2=W11-WO, and preferred value ranges of L0 and WO are 90~150 mm, respectively. In a slab stacking state, a distance from a side edge in the transverse direction of the cladding material 21c (corresponding to a long edge of the surface **p3c**) to a side edge in the transverse direction of the base material 11c (corresponding to a long edge of the surface **p1c0**) is a half of WO. And a distance from a side edge in a longitudinal direction of the cladding material 21c (corresponding to a short edge of the surface **p3c**) to a side edge in a longitudinal direction of the base material 11c (corresponding to a short edge of the surface **plc0**) is a half of L0.

For the fourth embodiment of the slab surface treatment step described above, as shown in FIG. 2d, an irregular concave-convex surface **p1d0** of a base material 11d has a length of L12 and a width of W12, a surface **p3d** of a cladding material 21d has a length of L2 and a width of W2. L2=L12-L0, W2=W12-WO, and preferred value ranges of L0 and WO are 90~150 mm, respectively. In a slab stacking state, a distance from a side edge in the transverse direction of the cladding material 21d (corresponding to a long edge of the surface **p3d**) to a side edge in the transverse direction of the base material 11d (corresponding to a long edge of the irregular concave-convex surface **p1d0**) is a half of WO. And a distance from a side edge in a longitudinal direction of the cladding material 21d (corresponding to a short edge of the surface **p3d**) to a side edge in a longitudinal direction of the base material 11d (corresponding to a short edge of the irregular concave-convex surface **p1d0**) is a half of L0.

For the fifth embodiment of the slab surface treatment step described above, as shown in FIG. 2e, an irregular concave-convex surface **p1e0** of a base material 11e has a length of L12 and a width of W12, a surface **p3e** of a cladding material 21e has a length of L2 and a width of W2. L2=L12-L0, W2=W12-WO, and preferred value ranges of L0 and WO are 90~150 mm, respectively. In a slab stacking state, a distance from a side edge in the transverse direction of the cladding material 21e (corresponding to a long edge of the surface **p3e**) to a side edge in the transverse direction of the base material 11e (corresponding to a long edge of the irregular concave-convex surface **p1e0**) is a half of WO. And a distance from a side edge in a longitudinal direction of the cladding material 21e (corresponding to a short edge of the surface **p3e**) to a side edge in a longitudinal direction of the base material 11e (corresponding to a short edge of the irregular concave-convex surface **p1e0**) is a half of L0.

The slab stacking step has been described above, and in a preferred embodiment, after the slab stacking step is performed, four stacked steel slabs are placed as a whole under a four-column hydraulic machine, and a pressure of ≥500 tons is applied to opposite surfaces of two base materials (that is, an upper surface of an upper base material and a lower surface of a lower base material). Thus, a closer contact between adjacent steel slabs may be achieved.

Further, in the step of "preparing four sealing strips with a width of W3, attaching the sealing strips to four side edges of the two cladding materials, performing gas shielded welding between adjacent sealing strips and between the sealing strips and the base materials to form the two base materials and sealing strips into an integral whole, obtaining a composite slab blank", based on a setting of sealing strips, four stacked steel slabs are connected to form an integrated composite slab blank. Specifically, as shown in FIGS. 2a-2e, the composite slab blank has a shape that: two base materials constitute upper and lower surfaces, two cladding materials are located in a middle, and four sealing strips form a four-sided frame surrounding four sides of the two cladding materials and connecting the two base materials. Here, in FIGS. 2a-2e, the sealing strips are denoted by 40a, 40b, 40c, 40d and 40e, respectively.

The width of the sealing strips is W3=2T2-1~2mm. Using sealing strips of this width to wrap both upper and lower cladding materials simultaneously enhances the wrapping effect. It should be noted that, as mentioned earlier, for better understanding and illustration, the thickness of the separating agent (labeled as 30a, 30b, 30c, 30d, and 30e) has been enlarged in Figures 2a to 2e. Correspondingly, the sealing strip width shown in Figures 2a to 2e appears larger than the sum of the thicknesses of the two cladding materials, but this is only due to the enlarged illustration of the separating agent thickness. In reality, the sealing strip width W3=2T2-1~2mm, meaning the width of the sealing strips is slightly smaller (1~2) mm than the sum of the thicknesses of the two cladding materials.

Furthermore, among the four sealing strips, two sealing strips abut against two side edges in the transverse direction of the two cladding materials, respectively, and has a length of L31=L2-1~2 mm; and the other two sealing strips abut against two side edges in a longitudinal direction of the two cladding materials, respectively, and has a length of L32=W2-1~2 mm.

Preferably, a thickness of T3 of the sealing strip is 12~15 mm.

Regarding a forming manner of each sealing strip, the sealing strip may be directly cut out from a steel plate according to a thickness of T3, a width of W3, and a length of L31 or L32 without welding, or may be formed by splicing a plurality of sealing strips with different lengths by welding. For example, sealing strips at side edges in a longitudinal direction of two cladding materials in the fourth embodiment of the slab surface treatment step described above, and sealing strips at side edges in the transverse direction of two cladding materials in the fifth embodiment of the slab surface treatment step described above.

As a preferred embodiment, in this step, before performing gas shielded welding between adjacent sealing strips and between the sealing strips and a base material, two ends and two sides of each sealing strip may be ground and polished first to remove a surface oxide scale and improve a welding effect; and/or, two ends and two sides of each sealing strip may be beveled first.

Further, as a preferred embodiment, in the step of "performing gas shielded welding between adjacent sealing strips and between the sealing strips and the base materials", a welding speed is 300~360 mm/min, and an interpass temperature is controlled to be 135~165°C during a welding process.

In the gas shielded welding, a shielding gas is 75~80%Ar+20~25%$CO_2$ in percentage by volume.

Next, in the step of "machining a circular hole on the sealing strip in a groove at the side edge of the composite slab blank, welding a seamless steel tube at the circular hole", the mentioned groove is formed between the two base materials, outside the sealing strips. In this step, the circular hole is machined to weld the seamless steel tube for subsequent vacuuming from the composite slab interior.

As a preferred embodiment, the circular hole is machined in a middle of a short edge (that is, a side edge in a longitudinal direction) of the composite slab blank, but the embodiment is not limited thereto.

As a preferred embodiment, a diameter of the circular hole is 8~12 mm. And correspondingly, an outer diameter of the seamless steel tube is consistent with the diameter of the circular hole, and is 8~12 mm, a wall thickness is 1.2~2 mm, and a length is 200~400 mm.

Next, in the step of "performing surfacing welding on the groove of four side edges of the composite slab base blank", a submerged arc surfacing welding is specifically adopted. It can be understood that, outside the four-sided frame formed by the sealing strips, a four-sided frame-shaped filling layer is formed by the surfacing welding in the step, and referring to FIGS. 2a-2e, wherein the filling layers formed by the surfacing welding are denoted by 50a, 50b, 50c, 50d and 50e, respectively.

As a preferred embodiment, before a surfacing welding, a flux is baked at 350°C for 2 h, and then is kept warm at 150°C for 1 h. And during the surfacing welding process, an interpass temperature is controlled to be 135~165°C, and a welding speed is 420~480 mm/min. Thus, the submerged arc surfacing welding technology, in combination with a foregoing sealing strip wrapping and a gas shielded welding, jointly implements a firm connection of four steel slabs, guarantees a connection strength, avoids a cracking abnormality in a subsequent composite slab rolling overall step, and on the basis of implementing the foregoing quality advantages of a clad plate, may further improve an interface bonding effect.

In addition, during the surfacing welding process, before each welding construction, an attachment on a weld pass needs to be cleaned to keep the weld pass clean; and after the welding is completed, an insulating cotton is used for covering for heat preservation.

Next, the step of "performing three times of vacuuming and two times of vacuum breaking on the composite slab through the seamless steel tube, finally making the vacuum degree $\leq 10^{-2}$Pa" is specifically and preferably as follows.

Firstly, connecting the seamless steel tube to a vacuum pump, wherein the seamless steel tube is communicated with a space inside the composite slab (for example, a surface-to-surface gap between a cladding material and a base material, a surface-to-surface gap between a cladding material and a cladding material, an end face gap between a cladding material and a sealing strip, etc.). Performing vacuuming on the composite slab, wherein a vacuum degree is $\leq 10^{-2}$Pa, and then maintaining the pressure for more than 4 hours. Next, connecting the seamless steel tube to a nitrogen device (for example, a nitrogen generation device, a nitrogen tank), thereby performing vacuum breaking on the composite slab, and filling nitrogen into the space inside the composite slab.

Then, reconnecting the seamless steel tube to the vacuum pump, performing vacuuming on the composite slab, wherein a vacuum degree is $\leq 10^{-1}$Pa, and not maintaining a pressure. And next, reconnecting the seamless steel tube to the nitrogen device, performing vacuum breaking on the composite slab, and filling nitrogen.

Finally, connecting the seamless steel tube to the vacuum pump for a third time, and performing vacuuming on the composite slab, wherein a vacuum degree is $\leq 10^{-2}$Pa.

Thus, it may be avoided that air in the space causes a surface oxidation at a clad interface in a subsequent composite slab rolling, thereby guaranteeing a clad interface bonding quality.

Further, in this step, a sealing treatment on the seamless steel tube may be implemented by using an existing feasible manner in steel field. For example, heating and clamping flat the seamless steel tube with a flame gun to implement the sealing.

The composite slab preparation overall step has been described in detail above, and through specific settings such as a surface treatment, three times of vacuuming and two times of vacuum breaking, a welding and a sealing, a foundation is laid for the subsequent composite slab to obtain an excellent interface bonding quality and an excellent surface quality in a subsequent rolling. And a setting of the separating agent is more conducive to a smooth separation of two clad sub-plates.

The composite slab preparation overall step has been described in detail above, and as described above, the preparation method of the present application further comprises a composite slab rolling overall step after the composite slab preparation overall step. The present application provides three embodiments of the composite slab rolling overall step, which are described in detail below, respectively.

<First Embodiment of Composite Slab Rolling Overall Step>

In this embodiment, as shown in Figure 3a, the composite slab rolling overall step includes the following sub-steps.

Heating the obtained composite slab, uniform heating temperature is 1150~1220°C, total heating time is $\geq 1.2$min/mm$\times$t (t is the thickness of composite slab), holding time in uniform heating section is 30min~50min.

Performing two-stage controlled rolling of rough rolling + finish rolling.

In rough rolling stage, a starting rolling temperature is $\leq 1050$°C, a finish rolling temperature is $\geq 980$°C. First transverse rolling, followed by longitudinal rolling. At least one pass in longitudinal rolling has reduction amount $\geq 35$mm. A total reduction amount is 40~60%. The rough rolling stage is carried out until a thickness of an intermediate slab reaches 2.5~3.5 times the target thickness of the unified clad plate.

Then performing water cooling during temperature holding period, starting finish rolling stage when a surface temperature of the intermediate slab drops below 860°C.

In finish rolling stage, a finish rolling temperature is ≥780°C, a total reduction amount is 55~75%. Obtaining the unified clad plate.

Performing cooling after rolling: the unified clad plate enters ultra-rapid cooling system for intermittent cooling.

The ultra-rapid cooling system has 24 groups of cooling headers arranged at an interval of 1m along a roller table, a cooling distance of each group of cooling headers is 1m. When the unified clad plate passes through the ultra-rapid cooling system, the operation of all 24 groups of the cooling headers is controlled in a periodic pattern consisting of N consecutive activated groups followed by M consecutive deactivated groups of cooling headers repeated as necessary. A cooling water pressure is 0.15~0.30MPa, a cooling rate is 3~15°C/s, and a final cooling temperature is 380~590°C. Wherein N takes a value of 2, 3 or 4, and M takes a value of 2, 3 or 4.

After exiting the ultra-rapid cooling system, the unified clad plate is directly entering straightening in a straightening machine.

And then placing straightened unified clad plate between two steel plates at a temperature of $T_f$-150°C~$T_f$+150°C for stacked cooling. A stacked cooling time is 0.4min/mm×t0±5min (t0 is a thickness of unified clad plate).

The unified clad plate is air-cooled on a cooling bed until room temperature after stacked cooling.

$T_f$=550+30Si-20Mn+15Cr-15Ni+10Mo, where the element symbols represent 100 times the mass percentage of the respective elements in base material.

Up to now, the composite slab rolling overall step is completed, and then the composite slab separation and straightening overall step is to be carried out.

Compared with a prior art, the embodiment is as follows.

Firstly, by adopting a heating and rolling technology, through a control of parameters such as the heating temperature, the heating time, the holding time, various temperatures and reductions in the rolling, the temperature and cooling rate in the cooling, etc., not only a mechanical property of a finally obtained clad plate may be guaranteed, but also a corrosion resistance of a cladding layer may be prevented from being deteriorated due to a preparation process of the clad plate.

In another aspect, by adopting the intermittent cooling manner, when the unified clad plate passes through the ultra-rapid cooling system, the unified clad plate moves in alternately turned-on cooling headers and turned-off cooling headers, in this way, each part of the unified clad plate will be cooled, re-heated, cooled, re-heated... and so on, until the unified clad plate leaves the ultra-rapid cooling system. In a cycle of cooled-reheated, the carbon steel base material continuously undergoes a phase transformation and a self-tempering effect, and the phase transformation gradually penetrates to a core part until the entire carbon steel base material completes the phase transformation. This intermittent cooling process is different from a conventional reciprocating cooling, reheating and self-tempering of the conventional reciprocating cooling occur after a surface layer or a near-surface layer has completed phase transformation, a temperature difference or a cooling rate difference between the surface layer and a core part is large, and a structure and a mechanical property are also greatly different; while the intermittent cooling process of the present embodiment is that, at a same moment, the unified clad plate has some parts in a cooling state and some parts in a reheating/self-tempering state, and, each part of the unified clad plate alternately performs cooling and reheating/self-tempering with time, so that differences in a temperature, a cooling rate, a structure, a performance and the like between a surface layer and a core part of the unified clad plate are small, for example, a Vickers hardness difference in a thickness direction of the base layer of the finally obtained unified clad plate is ≤10, a strength difference among a head, a middle and a tail is ≤40MPa, and a strength difference at each position of a whole plate is ≤40MPa. Furthermore, a plate shape of the clad plate can be further improved by the intermittent cooling, that is, a flatness deviation is low, and an excellent plate shape can be obtained even if a cooling on the cooling bed is performed directly without straightening after cooling is completed.

In another aspect, by adopting the stacked cooling, especially a temperature of two steel plates and a stacked cooling time in the stacked cooling, may further improve a microstructure, a performance and a shape of a finally obtained clad plate.

Further, in the process of intermittent cooling: if a thickness of the unified clad plate is below 54mm, for example, when the thickness is 10~54mm, a roller table speed of the ultra-rapid cooling system is 0.4~0.8m/s. 1st~4th groups of cooling headers are turned on, 5th~6th groups of cooling headers are not turned on, 7th~8th groups of cooling headers are turned on, 9th~10th groups of cooling headers are not turned on, 11th~12th groups of cooling headers are turned on, 13th~14th groups of cooling headers are not turned on, 15th~16th groups of cooling headers are turned on, 17th~18th groups of cooling headers are not turned on, 19th~20th groups of cooling headers are turned on, 21st~22nd groups of cooling headers are not turned on, and 23rd~24th groups of cooling headers are turned on. The unified clad plate passes through the ultra-rapid cooling system once, thereby the intermittent cooling is completed.

More preferably, in the process of intermittent cooling: if the thickness of the unified clad plate is >54mm, for example, when the thickness is >54mm and <70mm, the roller table speed of the ultra-rapid cooling system is above 0.2m/s and less than 0.6m/s. 1st~4th groups of cooling headers are turned on, 5th~8th groups of cooling headers are not turned on, 9th~12th groups of cooling headers are turned on, 13th~16th groups of cooling headers are not turned on, 17th~20th groups of cooling headers are turned on, 21st~22nd groups of cooling headers are not turned on, and 23rd~24th groups of cooling headers are turned on. The unified clad plate passes through the ultra-rapid cooling system once, thereby the intermittent cooling is completed. Thus, a plate shape control and a uniformity control of a thick stainless steel clad plate are realized, and a production difficulty of an existing thick stainless steel clad plate is overcome.

Preferably, in the process of intermittent cooling: when the thickness of the unified clad plate is ≥70mm, for example, when the thickness is 70mm~110mm, the roller table speed of the ultra-rapid cooling system is 0.4~0.9m/s, the unified clad plate first enters from an inlet of the ultra-rapid cooling system in a forward direction, and when a head of the unified clad plate reaches the 24th group of cooling headers, the roller table reverses, the unified clad plate passes through the ultra-rapid cooling system in a reverse direction and leaves from the inlet of the ultra-rapid cooling system, thereby the intermittent cooling is completed. And preferably, 1st~4th groups of cooling headers are turned on, 5th~8th groups of cooling headers are not turned on, 9th~12th groups of cooling headers are turned on, 13th~16th groups of cooling headers are not turned on, 17th~20th groups of cooling headers are turned on, 21st~22nd groups of cooling headers are not turned on, and 23rd~24th groups of cooling headers are turned on. Thus, a plate shape control and a uniformity control of an extra-thick stainless steel clad plate are realized, and a production difficulty of an existing extra-thick stainless steel clad plate is overcome.

Further, in the embodiment, in the step of " placing straightened unified clad plate between two steel plates at a temperature of $T_f$-150°C~$T_f$+150°C for stacked cooling", a length and a width of the used steel plates are both larger than a length and a width of the unified clad plate, and a thickness of the used steel plates is two times of a thickness of the unified clad plate.

<Second Embodiment of Composite Slab Rolling Overall Step>

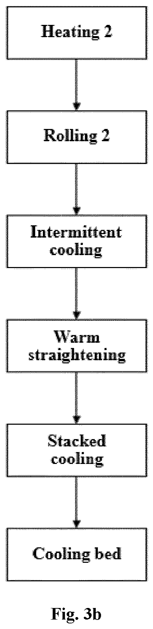

In this embodiment, as shown in Figure 3b, differs from the first embodiment in heating and rolling steps. Steps after rolling (including intermittent cooling, straightening, stacked cooling, air-cooling on cooling bed) are the same as the first embodiment and will not be repeated. Below, only the different steps (heating and rolling steps) will be explained.

Specifically, in the embodiment, a heating step of the composite slab rolling overall step is as follows.

Heating an obtained composite slab by a five-stage heating of a preheating, a first heating, a second heating, a third heating and a soaking. Wherein a preheating temperature is ≤850°C with a residence time of (0.45~0.55) min/mm×t. A first heating temperature is 1030~1090°C with a residence time of (0.35~0.45) min/mm×t. A second heating temperature is 1100~1160°C with a residence time of (0.25~0.35) min/mm×t. A third heating temperature is 1140~1180°C with a residence time of (0.15~0.25) min/mm×t. A soaking temperature is 1170~1210°C with a residence time of (0.10~0.20) min/mm×t. And t is a thickness of the composite slab.

A rolling step of the composite slab rolling overall step is as follows.

Adopting a two-stage controlled rolling of a rough rolling + a finish rolling.

A first pass adopts a longitudinal rolling with a rolling reduction of ≥46 mm. Transverse rolling is adopted since the second pass, until an n-th pass rolls a composite slab material to a target width of a final unified clad plate, wherein a rolling reduction of the second pass is ≥25 mm. Longitudinal rolling is adopted since an (n+1)th pass, a rolling reduction of the (n+1)th pass is ≥30 mm.

In a whole rough rolling stage, a rolling temperature of the first pass is ≥1060°C, a start rolling temperature of remaining passes is ≤1050°C, and a finish rolling temperature is ≥1000°C. The rough rolling stage is carried out until a thickness of an intermediate slab reaches 2.5~3.5 times the target thickness of the unified clad plate.

Then performing water cooling during temperature holding period, starting finish rolling stage when a surface temperature of the intermediate slab drops below 840°C.A start rolling temperature and a finish rolling temperature in the finish rolling stage is 810°C~840°C and 780°C~810°C.

Compared with a prior art, the embodiment also adopts an intermittent cooling and a stacked cooling, and accordingly, also has beneficial effects brought by an intermittent cooling process and a stacked cooling process, which can be seen from the description of the first embodiment of the composite slab rolling overall step.

Further, compared with the prior art, a heating process of the embodiment may better control a heating rate of a composite slab in each section, ensure a uniform heating of the composite slab, avoid a cracking and a gas leakage of the composite slab due to a difference in thermal properties of a material of a base material and a cladding material, and thereby may guarantee an interface bonding effect.

Furthermore, a rolling process of the embodiment, wherein a rough rolling adopts a manner of longitudinal rolling first, then transverse rolling, and then longitudinal rolling, may guarantee an implementation of a large-reduction rolling, enable a core of the composite slab to be effectively penetrated, promote a deformation of the core, and guarantee a bonding rate of a clad interface. During temperature holding period, an on-demand cooling device is adopted for a cooling, a time of the temperature holding period is reduced, a rolling efficiency is improved, and at the same time, a grain growth of a carbon steel base material due to an excessively long time for temperature holding period is avoided. And a temperature control in a finish rolling stage may refine a grain, and guarantee that a thick clad plate has a good low-temperature impact toughness.

<Third Embodiment of Composite Slab Rolling Overall Step>

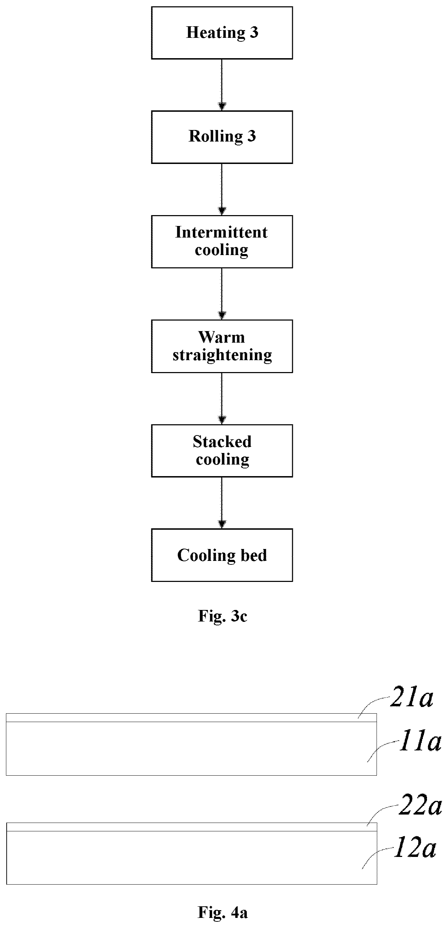

In this embodiment, as shown in Figure 3c, differs from the first embodiment in heating and rolling steps. Steps after rolling (including intermittent cooling, straightening, stacked cooling, air-cooling on cooling bed) are the same as the first embodiment and will not be repeated. Below, only the different steps (heating and rolling steps) will be explained.

Specifically, in the embodiment, a heating step of the composite slab rolling overall step is as follows.

Heating an obtained composite slab by a four-stage heating of a preheating, a first heating, a second heating and a soaking, wherein a preheating temperature is 950~1000°C with a residence time of 0.3 min/mm×t, a first heating temperature is 1050~1100°C, a second heating temperature is 1120~1180°C, a soaking temperature is 1150~1200°C, a total residence time of the first heating, the second heating and the soaking is 1.5 min/mm×t + 20~40 min, and t is a thickness of the composite slab.

A rolling step of the composite slab rolling overall step is as follows:

Performing a high-pressure water descaling on a composite slab after the composite slab leaves a heating furnace, and then performing a rolling.

During the rolling, transverse rolling is adopted since the first pass, until an n-th pass rolls a composite slab material to a width of Wt+0~40 mm, wherein Wt is a target width of a unified clad plate, and a total reduction rate up to now is ≥30%.

Longitudinal rolling is adopted since an (n+1)th pass, wherein a rolling reduction rate of the (n+1)th pass is ≥20%.

Performing water cooling during temperature holding period, when an intermediate slab has a thickness of 2.5-3.5 times of a target thickness of a unified clad plate, and when a surface temperature of the intermediate slab is reduced to be below 880°C, resuming the rolling until the rolling is ended, wherein a finish rolling temperature is $T_r \pm 20°C$, and a total reduction rate of a whole rolling process is ≥75%.

$$T_r = 855 - 150\sqrt{C} + 45Si - 15Ni + 31Mo + 106Nb + 100Ti + 70Al,$$ wherein an element symbol in the formula represents 100 times of a mass percentage of each element in a base material.

Compared with a prior art, the embodiment also adopts an intermittent cooling and a stacked cooling, and accordingly, also has beneficial effects brought by an intermittent cooling process and a stacked cooling process, which can be seen from the description of the first embodiment of the composite slab rolling overall step. Further, compared with the prior art, a heating process of the embodiment may guarantee that a composite slab can be sufficiently heated, and a deformation resistance during a rolling is reduced. Furthermore, a rolling process of the embodiment may not only reduce a deformation resistance during a widening, but also a cladding material and a base material may implement a good metallurgical bonding, an interface bonding strength of a clad plate may be effectively guaranteed, and in addition, the clad plate may obtain a good performance.

The composite slab rolling overall step has been described in detail above, and as described above, the preparation method of the present application further comprises a clad plate separation and straightening overall step. Specifically, the clad plate separation and straightening overall step comprises the following sub-steps.

For a unified clad plate obtained in the foregoing composite slab rolling overall step, cutting an edge of the unified clad plate with a plasma cutting machine to remove a portion outside the sealing strip, thereby separating the unified clad plate into an upper clad sub-plate and a lower clad sub-plate.

Placing the sized clad sub-plate on a leveling machine with a cladding layer facing upward for a leveling.

Wherein, when performing a transverse leveling, controlling a leveling force of the leveling machine to be $F1 = v \times a \times b \times c_t \times \sigma t/(d \times (v - c_t/a))$. When performing a longitudinal leveling, controlling a leveling force of the leveling machine to be $F2 = a \times b \times c_l \times \sigma_l/(d + c_l)$. Wherein, a denotes a width of the clad sub-plate, b is a thickness of the clad sub-plate. The $c_t$ denotes a flatness deviation per meter in the transverse direction of the clad sub-plate, measured in mm. The $c_l$ denotes a flatness deviation per meter in a longitudinal direction of the clad sub-plate, measured in mm. The d denotes a working distance of the leveling machine, $\sigma_t$ denotes a tensile yield strength in the transverse direction of the clad sub-plate, $\sigma_l$ denotes a tensile yield strength in the longitudinal direction of the clad sub-plate, and v denotes a Poisson's ratio.

Finally, performing a cold straightening on the clad sub-plate to obtain a single-sided stainless steel clad plate product.

Thus, through a regulation and a control of a leveling force of a leveling machine, the present application may implement a shape control of a clad plate, and is convenient to operate and excellent in effect.

And, the portion outside the sealing strip in the step of " cutting an edge of the unified clad plate with a plasma cutting machine to remove a portion outside the sealing strip" is, after the foregoing composite slab rolling overall step, a portion of an edge of the unified clad plate converted from the sealing strips and the filling layer in the composite slab mentioned above. Thus, by removing the portion, the stainless steel cladding layer is exposed, and without a connecting function of the portion of the edge, the unified clad plate is automatically separated into an upper clad sub-plate and a lower clad sub-plate.

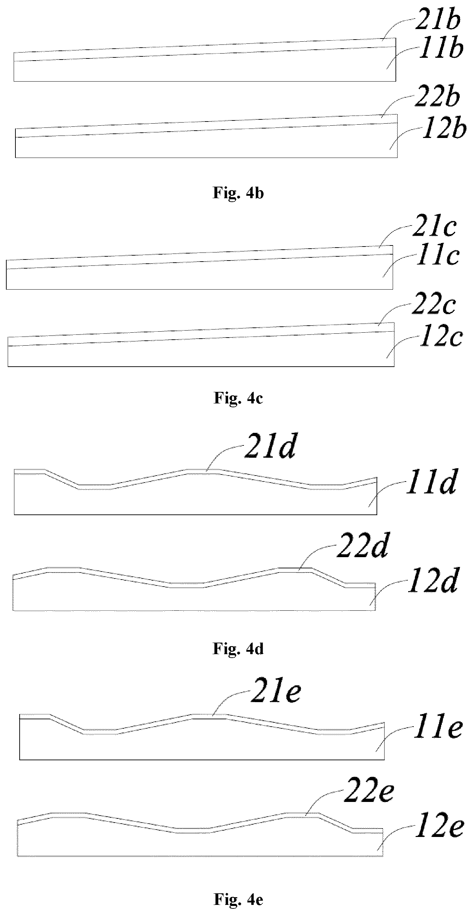

Referring to FIGS. 4a-4e, corresponding to the five embodiments of the slab surface treatment step described above, FIGS. 4a-4e show cross-sectional shapes of corresponding two single-sided clad sub-plates (that is, final clad plates), respectively. Each obtained clad sub-plate is composed of a cladding layer and a base layer, the cladding layer is obtained by rolling an original cladding material, and the base layer is obtained by rolling an original base material. And in view of this, in FIGS. 4a-4e, a reference numeral of the original cladding material is still used for the cladding layer, and a reference numeral of the original base material is also still used for the base layer.

And, referring to FIG. 4a, based on the first embodiment of the slab surface treatment step described above, a prepared single-sided stainless steel clad plate is an equal-thickness plate with a total thickness of 5-55 mm, a base layer thickness of 4-45 mm, and a cladding layer thickness of 1-10 mm.

And referring to FIGS. 4b-4e, based on the second to fifth embodiments of the slab surface treatment step described above, a prepared single-sided stainless steel clad plate is a non-equal-thickness plate, a maximum value of a total thickness of the clad plate (corresponding to a thickest position of the clad plate) is 7-55 mm, and a minimum value (corresponding to a thinnest position of the clad plate) is 5-47 mm, a maximum value of a base layer thickness is 6-45 mm (corresponding to the thickest position of the clad plate), and a minimum value (corresponding to the thinnest position of the clad plate) is 4-37 mm, and a cladding layer thickness is 1-10 mm.

Further, the present application provides a single-sided stainless steel clad plate, the stainless steel clad plate is prepared by the preparation method of any one of the foregoing embodiments, and has both an excellent mechanical property and an excellent corrosion resistance, and has an excellent shape, an excellent interface bonding quality, an excellent uniformity, an excellent impact toughness and an excellent surface quality relative to a prior art.

Specifically, a single-sided stainless steel clad plate of an embodiment of the present application is sampled according to GB/T 2975 "Steel and Steel Products-Location and Preparation of Samples for Mechanical Testing", and:

in terms of a shape, the clad plate is tested according to GB/T 709 "Dimensions, Shape, Weight and Tolerances for Hot-Rolled Steel Plates and Strips", and a flatness of the clad plate is ≤3 mm/m, and even a flatness is ≤2 mm/m;

in terms of an interface bonding quality, a tensile test is performed on the clad plate according to GB/T 6396 "Mechanical and Technological Properties Test Methods of Clad Steel Plates", a clad interface bonding rate of the clad plate is 100%, and a shear strength is ≥300 MPa, and even a shear strength is ≥360 MPa;

in terms of a mechanical property, a tensile test is performed according to GB/T 6396 "Mechanical and Technological Properties Test Methods of Clad Steel Plates" and GB/T 228.1 "Metallic Materials-Tensile Testing-Part 1: Method of Test at Room Temperature", a yield strength of the clad plate is ≥345 MPa, a tensile strength is ≥490 MPa, an elongation after fracture is ≥18%, and a yield ratio is ≤0.85; a Vickers hardness difference in a thickness direction of a base layer of the clad plate is ≤10, a strength difference between a head, a middle and a tail is ≤40 MPa, and a strength difference at various positions of a whole plate is ≤40 MPa;

a test is performed according to GB/T 6396 "Mechanical and Technological Properties Test Methods of Clad Steel Plates" and GB/T 229 "Metallic Materials-Charpy Pendulum Impact Test Method", a 0°C impact energy of the clad plate is ≥120 J, a -20°C impact energy is ≥120 J, a -40°C impact energy is ≥120 J, and even, a 0°C impact energy is ≥240 J, a -20°C impact energy is ≥200 J, and a -40°C impact energy is ≥150 J;

a sampling is performed according to GB/T 2975 "Steel and Steel Products-Location and Preparation of Samples for Mechanical Testing", and a test is performed according to GB/T 6396 "Mechanical and Technological Properties Test Methods of Clad Steel Plates", the clad plate has no crack after being bent outward by 180°, and has no crack after being bent inward by 180°.

a sampling is performed according to GB/T 6396 "Mechanical and Technological Properties Test Methods of Clad Steel Plates", and a test is performed according to GB/T 4334 "Corrosion of Metals and Alloys-Test Methods for Intergranular Corrosion of Austenitic and Ferritic-Austenitic (Duplex) Stainless Steels", the clad plate is boiled in a sulfuric acid-copper sulfate solution for 20 h, and after being bent by 180°, a cladding layer has no intergranular corrosion crack.

The detailed descriptions listed above are only specific descriptions of feasible embodiments of the present application, and are not intended to limit a protection scope of the present application, and any equivalent implementation or modification made without departing from a technical spirit of the present application should be included in the protection scope of the present application.

Hereinafter, beneficial effects of the present application will be further described through a plurality of examples, and of course, these examples are only a part of a plurality of various embodiments included in the present application, but not all.

In these examples, steel grades and chemical compositions of selected cladding materials and base materials are shown in Table 1, respectively. And, "-" represents that a corresponding element is not actively added during a slab preparation process (a content is zero or close to zero).

[Table 1]

| the chemical composition of base material, by mass percentage (%) | | | | | | | | | | | | |
|---|---|---|---|---|---|---|---|---|---|---|---|---|
| Steel grade | C | Si | Mn | P | S | Cr | Nb | Ti | Al | Ni | Mo | Cu |
| Q345 | 0.14 | 0.20 | 1.36 | 0.015 | 0.0026 | 0.14 | 0.012 | 0.015 | 0.032 | - | - | - |
| Q370 | 0.09 | 0.21 | 1.41 | 0.013 | 0.0023 | 0.13 | 0.021 | 0.016 | 0.031 | 0.13 | - | - |
| Q420 | 0.06 | 0.18 | 1.48 | 0.011 | 0.0019 | 0.18 | 0.026 | 0.012 | 0.038 | 0.18 | 0.12 | - |
| Q500 | 0.05 | 0.15 | 1.50 | 0.009 | 0.0012 | 0.25 | 0.030 | 0.015 | 0.036 | 0.20 | 0.18 | 0.20 |

| the chemical composition of cladding material, by mass percentage (%) | | | | | | | | |
|---|---|---|---|---|---|---|---|---|
| Steel grade | C | Si | Mn | P | S | Ni | Cr | Mo |
| 316L | 0.019 | 0.40 | 1.03 | 0.032 | 0.002 | 10.07 | 16.66 | 2.04 |

Using the base and cladding materials from Table 1, composite slabs were prepared according to the composite slab preparation overall step. For each example, the base material, cladding material, composite slab thickness, and composite slab type are shown in Table 2. In the "Composite Slab Type" column, "①", "②", "③", "④", and "⑤" represent implementation according to the first through fifth embodiments of the slab surface treatment step, respectively.

[Table 2]

| | base material | cladding material | composite slab thickness, mm | Composite Slab Type |
|---|---|---|---|---|
| example 1 | Q345 | 316L | 378 | ① |
| example 2 | Q370 | 316L | 322 | ① |
| example 3 | Q420 | 316L | 266 | ① |
| example 4 | Q500 | 316L | 210 | ① |
| example 5 | Q345 | 316L | 378 | ② |
| example 6 | Q370 | 316L | 322 | ③ |
| example 7 | Q420 | 316L | 266 | ④ |
| example 8 | Q500 | 316L | 210 | ⑤ |
| example 9 | Q370 | 316L | 322 | ① |
| example 10 | Q370 | 316L | 322 | ① |
| example 11 | Q500 | 316L | 462 | ① |
| example 12 | Q500 | 316L | 546 | ① |
| example 13 | Q345 | 316L | 660 | ① |
| example 14 | Q345 | 316L | 140 | ① |

Furthermore, each example was processed according to the composite slab rolling overall step, with specific parameters shown in Tables 3 and 4. In Table 3's "Heating + Rolling" column, "I", "II", and "III" represent implementation according to the first through third embodiments of the composite slab rolling overall step, respectively.

[Table 3]

| | Large clad plate thickness, mm | Heating - Rolling | Soaking temperature, °C | Partial parameters | | | |
|---|---|---|---|---|---|---|---|
| | | | | start rolling temperature of rough rolling °C | finish rolling temperature of rough rolling,°C | start rolling temperature of finish rolling, °C | finish rolling temperature of finish rolling, °C |
| example 1 | 54 | I | 1160 | 1050 | 1010 | 860 | 840 |

(continued)

| | Large clad plate thickness, mm | Heating - Rolling | Soaking temperature, °C | Partial parameters | | | |
|---|---|---|---|---|---|---|---|
| | | | | start rolling temperature of rough rolling °C | finish rolling temperature of rough rolling,°C | start rolling temperature of finish rolling, °C | finish rolling temperature of finish rolling, °C |
| example 2 | 46 | I | 1180 | 1040 | 1000 | 850 | 830 |
| example 3 | 38 | I | 1200 | 1030 | 990 | 840 | 820 |
| example 4 | 30 | I | 1220 | 1020 | 980 | 830 | 810 |
| example 5 | 54 | I | 1160 | 1050 | 1010 | 860 | 840 |
| example 6 | 46 | I | 1180 | 1040 | 1000 | 850 | 830 |
| example 7 | 38 | I | 1200 | 1030 | 990 | 840 | 820 |
| example 8 | 30 | I | 1220 | 1020 | 980 | 830 | 810 |
| example 9 | 46 | II | 1190 | 1070 | 1030 | 840 | 810 |
| example 10 | 46 | III | 1200 | 1060 | 1020 | 880 | 825 |
| example 11 | 66 | II | 1210 | 1070 | 1010 | 830 | 800 |
| example 12 | 78 | III | 1200 | 1080 | 1020 | 870 | 835 |
| example 13 | 110 | III | 1200 | 1050 | 1030 | 860 | 810 |
| example 14 | 10 | I | 1150 | 1020 | 980 | 860 | 820 |

[Table 4]

| | intermittent cooling | | | | | stacked cooling |
|---|---|---|---|---|---|---|
| | cooling water pressure, MPa | cooling rate, °C/s | final cooling temperature, °C | the activated headers | Roller table speed, m/s | temperature of steel plate, °C |
| example 1 | 0.22 | 3~8 | 570~590 | 1-4, 7-8, 11-12, 15-16, 19-20, 23-24 | 0.6 | 630-640 |
| example 2 | 0.20 | 4~10 | 540~560 | 1-4, 7-8, 11-12, 15-16, 19-20, 23-24 | 0.6 | 530-540 |
| example 3 | 0.18 | 5~12 | 510~530 | 1-4, 7-8, 11-12, 15-16, 19-20, 23-24 | 0.6 | 490-500 |

(continued)

| | intermittent cooling | | | | | stacked cooling |
|---|---|---|---|---|---|---|
| | cooling water pressure, MPa | cooling rate, °C/s | final cooling temperature, °C | the activated headers | Roller table speed, m/s | temperature of steel plate, °C |
| example 4 | 0.15 | 6~15 | 430~450 | 1-4, 7-8, 11-12, 15-16, 19-20, 23-24 | 0.6 | 400-410 |
| example 5 | 0.22 | 3~8 | 570~590 | 1-4, 7-8, 11-12, 15-16. 19-20, 23-24 | 0.6 | 630-640 |
| example 6 | 0.20 | 4~10 | 540~560 | 1-4, 7-8, 11-12, 15-16, 19-20, 23-24 | 0.6 | 530-540 |
| example 7 | 0.18 | 5~12 | 510~530 | 1-4, 7-8, 11-12, 15-16, 19-20, 23-24 | 0.6 | 490-500 |
| example 8 | 0.15 | 6~15 | 430~450 | 1-4, 7-8, 11-12, 15-16, 19-20, 23-24 | 0.6 | 400-410 |
| example 9 | 0.20 | 4~10 | 540~560 | 1-4, 7-8, 11-12, 15-16, 19-20, 23-24 | 0.6 | 530-540 |
| example 10 | 0.20 | 4~10 | 540~560 | 1-4, 7-8, 11-12, 15-16, 19-20, 23-24 | 0.6 | 530-540 |
| example 11 | 0.25 | 3~8 | 410~430 | 1-4, 9-12, 17-20, 23-24 | 0.5 | 390-400 |
| example 12 | 0.30 | 3~8 | 380~400 | 1-4, 9-12, 17-20, 23-24 | 0.45 | 380-390 |
| example 13 | 0.22 | 3~8 | 570~590 | 1-4, 9-12, 17-20, 23-24 | 0.65 | 630-640 |
| example 14 | 0.22 | 6~15 | 570~590 | 1-4, 7-8, 11-12, 15-16, 19-20, 23-24 | 0.8 | 630-640 |

Further, each example was processed according to the clad plate separation and straightening overall step to obtain single-sided stainless steel clad plate products. The total thickness, base layer thickness, cladding layer thickness, and base layer microstructure of these example products are shown in Table 5. Range values in the clad plate thickness and base layer thickness columns represent minimum~maximum thickness.

[Table 5]

| | clad plate thickness, mm | Base layer thickness, mm | cladding layer thickness, mm | microstructural constituents and their volume fractions |
|---|---|---|---|---|
| example 1 | 27 | 24 | 3 | 60~85% Ferrite+40~15% Pearlite |
| example 2 | 23 | 20 | 3 | 70~85% Ferrite+10~20% Pearlite+5~10% Bainite |
| example 3 | 19 | 16 | 3 | 60~70% Bainite+40~30% Ferrite |
| example 4 | 15 | 12 | 3 | 70~90% Bainite+30~10% Ferrite |

(continued)

|  | clad plate thickness, mm | Base layer thickness, mm | cladding layer thickness, mm | microstructural constituents and their volume fractions |
|---|---|---|---|---|
| example 5 | 23-31 | 20~28 | 3 | 60~85% Ferrite+40~15% Pearlite |
| example 6 | 19-27 | 16~24 | 3 | 70~85% Ferrite+10~20% Pearlite+5~10% Bainite |
| example 7 | 15-23 | 12~20 | 3 | 60~70% Bainite+40~30% Ferrite |
| example 8 | 12-18 | 9~15 | 3 | 70~90% Bainite+30~10% Ferrite |
| example 9 | 23 | 20 | 3 | 70~85% Ferrite+10~20% Pearlite+5~10% Bainite |
| example 10 | 23 | 20 | 3 | 70~85% Ferrite+10~20% Pearlite+5~10% Bainite |
| example 11 | 33 | 30 | 3 | 70~90% Bainite+30~10% Ferrite |
| example 12 | 39 | 36 | 3 | 70~90% Bainite+30~10% Ferrite |
| example 13 | 55 | 45 | 10 | 60~85% Ferrite+40~15% Pearlite |
| example 14 | 5 | 4 | 1 | 60~85% Ferrite+40~15% Pearlite |

Furthermore, using the previously disclosed sampling and testing standards, samples from each example were tested. All examples showed a 100% interface bonding rate, passed 180° internal bending (no cracks), passed 180° external bending (no cracks). Furthermore, after boiling in a sulfuric acid-copper sulfate solution for 20 h followed by 180° bending, no intergranular corrosion cracks were observed in the cladding layer. Other performance test results are shown in Table 6.

[Table 6]

| | Yield strength, MPa | Tensile strength, MPa | Elongation after fracture, % | Shear strength, MPa | -40°C impact energy, J | flatness deviation, mm/m | Vickers hardness difference | Strength difference among head, middle and tail, MPa | Whole plate strength difference, MPa |
|---|---|---|---|---|---|---|---|---|---|
| example 1 | 385 | 523 | 28 | 378 | 268 | 1 | 8 | 24 | 27 |
| example 2 | 418 | 532 | 31 | 387 | 244 | 2 | 8 | 26 | 27 |
| example 3 | 489 | 588 | 25 | 430 | 313 | 2 | 9 | 30 | 33 |
| example 4 | 565 | 676 | 24 | 450 | 278 | 3 | 9 | 29 | 34 |
| example 5 | 392 | 533 | 29 | 382 | 273 | 1 | 9 | 30 | 30 |
| example 6 | 425 | 541 | 30 | 391 | 248 | 2 | 9 | 30 | 30 |
| example 7 | 478 | 583 | 27 | 419 | 305 | 2 | 9 | 30 | 30 |
| example 8 | 557 | 679 | 25 | 465 | 299 | 3 | 9 | 30 | 30 |
| example 9 | 421 | 552 | 33 | 408 | 321 | 2 | 8 | 24 | 29 |
| example 10 | 409 | 539 | 31 | 427 | 276 | 2 | 8 | 24 | 28 |
| example 11 | 559 | 671 | 25 | 442 | 265 | 1 | 9 | 32 | 35 |
| example 12 | 548 | 668 | 24 | 431 | 243 | 1 | 9 | 31 | 35 |
| example 13 | 355 | 521 | 29 | 312 | 206 | 2 | 10 | 38 | 40 |
| **example 14** | 365 | 530 | 30 | 328 | - | 3 | 6 | 20 | 24 |

EP 4 663 317 A1

To sum up, in summary, compared with a prior art, the present application is as follows: on one hand, in a whole preparation method, through a specific control of a process, a corrosion resistance and a mechanical strength of a stainless steel clad plate are guaranteed, and a deterioration of the corrosion resistance and a mechanical property in a composite slab rolling process is avoided; in another aspect, problems of a poor shape, a poor interface bonding quality and a poor surface quality of an existing stainless steel composite thick plate are solved, such that the stainless steel clad plate has an excellent shape and an excellent interface bonding quality, and obvious surface defects such as pits and scratches brought by an existing explosion composite technology are avoided; in yet another aspect, a yield rate in a production process is high, and a production efficiency is high.

**Claims**

1.    A preparation method of a stainless steel clad plate, wherein the method comprises the following steps:

        (1) composite slab preparation

            preparing two carbon steel slabs with a thickness of T1, a length of L1, and a width of W1 as a base material; and preparing two stainless steel slabs with a thickness of T2, a length of L2<L1, and a width of W2<W1 as a cladding material;
            performing surface treatment on at least one surface of each of the two base materials and two cladding materials;
            applying a separating agent on one surface of one cladding material;
            stacking slabs in an order of a base material, a cladding material, a cladding material, a base material; the cladding material is placed centrally relative to the base material, surfaces of the base material and the cladding material that contact each other are all surfaces subjected to the surface treatment, and surface coated with the separating agent faces another cladding material;
            preparing four sealing strips with a width of W3, where W3=2T2-1~2mm, attaching the sealing strips to four side edges of the two cladding materials, performing gas shielded welding between adjacent sealing strips and between the sealing strips and the base materials to form the two base materials and sealing strips into an integral whole, obtaining a composite slab blank;
            machining a circular hole on the sealing strip in a groove at the side edge of the composite slab blank, welding a seamless steel tube at the circular hole;
            performing surfacing welding on the grooves at four side edges of the composite slab blank;
            performing three times of vacuuming and two times of vacuum breaking on the composite slab through the seamless steel tube, finally making the vacuum degree $\leq 10^{-2}$Pa; and then performing sealing treatment on the seamless steel tube to obtain a composite slab;

        (2) composite slab rolling

            heating the composite slab, and then performing two-stage controlled rolling of rough rolling + finish rolling;
            performing cooling after rolling: the unified clad plate enters ultra-rapid cooling system for intermittent cooling; the ultra-rapid cooling system has 24 groups of cooling headers arranged at an interval of 1m along a roller table, a cooling distance of each group of cooling headers is 1m; when the unified clad plate passes through the ultra-rapid cooling system, the operation of all 24 groups of the cooling headers is controlled in a periodic pattern consisting of N consecutive activated groups followed by M consecutive deactivated groups of cooling headers repeated as necessary; a cooling water pressure is 0.15~0.30MPa, a cooling rate is 3~15°C/s, and a final cooling temperature is 380~590°C; wherein N takes a value of 2, 3 or 4, and M takes a value of 2, 3 or 4;
            after exiting the ultra-rapid cooling system, the unified clad plate is directly entering straightening in a straightening machine; and then placing straightened unified clad plate between two steel plates at a temperature of $T_f$-150°C~$T_f$+150°C for stacked cooling; a stacked cooling time is 0.4min/mm×t0±5min (t0 is a thickness of unified clad plate); the unified clad plate is air-cooled on a cooling bed until room temperature after stacked cooling; $T_f$=550+30Si-20Mn+15Cr-15Ni+10Mo, where the element symbols represent 100 times the mass percentage of the respective elements in base material;

        (3) clad plate separation and straightening

            cutting an edge of the unified clad plate to remove a portion outside the sealing strip, thereby separating the unified clad plate into an upper clad sub-plate and a lower clad sub-plate;

placing the sized clad sub-plate on a leveling machine with a cladding layer facing upward for a leveling; when performing a transverse leveling, controlling a leveling force of the leveling machine to be $F1=v\times a\times b\times c_t\times\sigma_t/(d\times(v-c_t/a))$; when performing a longitudinal leveling, controlling a leveling force of the leveling machine to be $F2= a\times b\times c_l\times\sigma_l/(d+c_l)$; the a denotes a width of the clad sub-plate, b is a thickness of the clad sub-plate; the $c_t$ denotes a flatness deviation per meter in the transverse direction of the clad sub-plate, measured in mm; the $c_l$ denotes a flatness deviation per meter in a longitudinal direction of the clad sub-plate, measured in mm; the d denotes a working distance of the leveling machine, $\sigma_t$ denotes a tensile yield strength in the transverse direction of the clad sub-plate, $\sigma_l$ denotes a tensile yield strength in the longitudinal direction of the clad sub-plate, and v denotes a Poisson's ratio;

finally, performing a cold straightening on the clad sub-plate to obtain a single-sided stainless steel clad plate product.

2. The preparation method of the stainless steel clad plate according to claim 1, wherein the step of "performing three times of vacuuming and two times of vacuum breaking on the composite slab through the seamless steel tube, finally making the vacuum degree ≤10⁻²Pa" specifically comprises:

firstly, connecting the seamless steel tube to a vacuum pump, performing vacuuming on the composite slab, wherein a vacuum degree is ≤10⁻²Pa, and then maintaining the pressure for more than 4 hours; next, connecting the seamless steel tube to a nitrogen device, performing vacuum breaking on the composite slab, and filling nitrogen into the space inside the composite slab;

then, reconnecting the seamless steel tube to the vacuum pump, performing vacuuming on the composite slab, wherein a vacuum degree is ≤10⁻¹Pa, and not maintaining a pressure; next, reconnecting the seamless steel tube to the nitrogen device, performing vacuum breaking on the composite slab, and filling nitrogen;

finally, connecting the seamless steel tube to the vacuum pump for a third time, and performing vacuuming on the composite slab, a vacuum degree is ≤10⁻²Pa.

3. The preparation method of the stainless steel clad plate according to claim 1, wherein the step of "heating the composite slab, and then performing two-stage controlled rolling of rough rolling + finish rolling" specifically comprises:

heating the obtained composite slab, uniform heating temperature is 1150~1220°C, total heating time is ≥1.2min/mm×t, wherein the t is the thickness of composite slab, holding time in uniform heating section is 30min~50min;

performing two-stage controlled rolling of rough rolling + finish rolling; in rough rolling stage, a starting rolling temperature is ≤1050°C, a finish rolling temperature is ≥980°C; first transverse rolling, followed by longitudinal rolling; at least one pass in longitudinal rolling has reduction amount ≥35mm; a total reduction amount is 40~60%; the rough rolling stage is carried out until a thickness of an intermediate slab reaches 2.5~3.5 times the target thickness of the unified clad plate; then performing water cooling during temperature holding period, starting finish rolling stage when a surface temperature of the intermediate slab drops below 860°C; in finish rolling stage, a finish rolling temperature is ≥780°C, a total reduction amount is 55~75%, obtaining the unified clad plate.

4. The preparation method of the stainless steel clad plate according to claim 1, wherein the step of "heating the composite slab, and then performing two-stage controlled rolling of rough rolling + finish rolling" specifically comprises:

heating an obtained composite slab by a five-stage heating of a preheating, a first heating, a second heating, a third heating and a soaking; wherein a preheating temperature is ≤850°C with a residence time of (0.45~0.55) min/mm×t; a first heating temperature is 1030~1090°C with a residence time of (0.35~0.45) min/mm×t; a second heating temperature is 1100~1160°C with a residence time of (0.25~0.35) min/mm×t; a third heating temperature is 1140~1180°C with a residence time of (0.15~0.25) min/mm×t; a soaking temperature is 1170~1210°C with a residence time of (0.10~0.20) min/mm×t; the t is a thickness of the composite slab;

adopting a two-stage controlled rolling of a rough rolling + a finish rolling; a first pass adopts a longitudinal rolling with a rolling reduction of ≥46 mm; transverse rolling is adopted since the second pass, until an n-th pass rolls a composite slab material to a target width of a final unified clad plate, wherein a rolling reduction of the second pass is ≥25 mm; longitudinal rolling is adopted since an (n+1)th pass, a rolling reduction of the (n+1)th pass is ≥30 mm; in a whole rough rolling stage, a rolling temperature of the first pass is ≥1060°C, a start rolling temperature of remaining passes is ≤1050°C, and a finish rolling temperature is ≥1000°C; the rough rolling stage is carried out until a thickness of an intermediate slab reaches 2.5~3.5 times the target thickness of the unified clad plate; then performing water cooling during temperature holding period, starting finish rolling stage when a surface temperature of the intermediate slab drops below 840°C.A start rolling temperature and a finish rolling temperature in the finish rolling stage is 810°C~840°C and 780°C~810°C.

5. The preparation method of the stainless steel clad plate according to claim 1, wherein the step of "heating the composite slab, and then performing two-stage controlled rolling of rough rolling + finish rolling" specifically comprises:

heating an obtained composite slab by a four-stage heating of a preheating, a first heating, a second heating and a soaking, wherein a preheating temperature is 950~1000°C with a residence time of 0.3 min/mm×t, a first heating temperature is 1050~1100°C, a second heating temperature is 1120~1180°C, a soaking temperature is 1150~1200°C, a total residence time of the first heating, the second heating and the soaking is 1.5 min/mm×t + 20~40 min, and t is a thickness of the composite slab;

performing a high-pressure water descaling on a composite slab after the composite slab leaves a heating furnace, and then performing a rolling; during the rolling, transverse rolling is adopted since the first pass, until an n-th pass rolls a composite slab material to a width of Wt+0~40 mm, wherein Wt is a target width of a unified clad plate, and a total reduction rate up to now is ≥30%; longitudinal rolling is adopted since an (n+1)th pass, wherein a rolling reduction rate of the (n+1)th pass is ≥20%; performing water cooling during temperature holding period, when an intermediate slab has a thickness of 2.5-3.5 times of a target thickness of a unified clad plate, and when a surface temperature of the intermediate slab is reduced to be below 880°C, resuming the rolling until the rolling is ended, wherein a finish rolling temperature is $T_r \pm 20°C$, and a total reduction rate of a whole rolling process is ≥75%; $T_r = 855 - 150\sqrt{C} + 45Si - 15Ni + 31Mo + 106Nb + 100Ti + 70Al$, wherein an element symbol in the formula represents 100 times of a mass percentage of each element in a base material.

6. The preparation method of the stainless steel clad plate according to claim 1, wherein in the intermittent cooling:

when a thickness of the unified clad plate is below 54mm, a roller table speed of the ultra-rapid cooling system is 0.4~0.8m/s; 1st~4th groups of cooling headers are turned on, 5th~6th groups of cooling headers are not turned on, 7th~8th groups of cooling headers are turned on, 9th~10th groups of cooling headers are not turned on, 11th~12th groups of cooling headers are turned on, 13th~14th groups of cooling headers are not turned on, 15th~16th groups of cooling headers are turned on, 17th~18th groups of cooling headers are not turned on, 19th~20th groups of cooling headers are turned on, 21st~22nd groups of cooling headers are not turned on, and 23rd~24th groups of cooling headers are turned on; the unified clad plate passes through the ultra-rapid cooling system once, thereby the intermittent cooling is completed;

when the thickness of the unified clad plate is >54mm, the roller table speed of the ultra-rapid cooling system is above 0.2m/s and less than 0.6m/s; 1st~4th groups of cooling headers are turned on, 5th~8th groups of cooling headers are not turned on, 9th~12th groups of cooling headers are turned on, 13th~16th groups of cooling headers are not turned on, 17th~20th groups of cooling headers are turned on, 21st~22nd groups of cooling headers are not turned on, and 23rd~24th groups of cooling headers are turned on; the unified clad plate passes through the ultra-rapid cooling system once, thereby the intermittent cooling is completed.

7. The preparation method of the stainless steel clad plate according to claim 1, wherein in the intermittent cooling: when the thickness of the unified clad plate is ≥70mm, the roller table speed of the ultra-rapid cooling system is 0.4~0.9m/s, the unified clad plate first enters from an inlet of the ultra-rapid cooling system in a forward direction, and when a head of the unified clad plate reaches the 24th group of cooling headers, the roller table reverses, the unified clad plate passes through the ultra-rapid cooling system in a reverse direction and leaves from the inlet of the ultra-rapid cooling system, the intermittent cooling is completed.

8. The preparation method of the stainless steel clad plate according to claim 1, wherein in the step of "placing straightened unified clad plate between two steel plates at a temperature of $T_f$-150°C~$T_f$+150°C for stacked cooling", a length and a width of the used steel plates are both larger than a length and a width of the unified clad plate, and a thickness of the used steel plates is two times of a thickness of the unified clad plate.

9. The preparation method of the stainless steel clad plate according to claim 1, wherein in the step of "applying a separating agent on one surface of one cladding material", the separating agent is a coating liquid containing silicon oxide and magnesium oxide, with a mass ratio of 3:1;

the amount of separating agent applied is 20y mg/m$^2$, where y is the ratio of the thickness of the composite slab to the thickness of the unified clad plate;

before the step of "stacking slabs in an order of a base material, a cladding material, a cladding material, a base material", the cladding material applied with separating agent is placed in a car furnace for heating and drying, with a drying temperature of 340~360°C and drying time of 35~45min.

10. The preparation method of the stainless steel clad plate according to claim 1, wherein in the step of "applying a separating agent on one surface of one cladding material ", the composition of the separating agent by weight ratio is: 25~35% silicon nitride, 5~10% thermosetting amino resin, 55~70% water;

the thickness of the applied separating agent is 0.2~0.5mm;

before the step of "stacking slabs in an order of a base material, a cladding material, a cladding material, a base material", the cladding material applied with separating agent is heated and dried at a temperature of 100~250°C for 20~40min.

11. The preparation method of the stainless steel clad plate according to claim 1, wherein the step of "performing surface treatment on at least one surface of each of the two base materials and two cladding materials" comprises:

in a relatively complementary shape manner, performing milling and grinding processing on one surface of the two base materials, processing the surface into an irregular concave-convex surface containing X planes successively connected in the transverse direction, the base material being a non-uniform thickness slab with non-monotonic thickness variation in the transverse direction, wherein the irregular concave-convex surface has a length of L12=L1 and a total width of W12>W1; or, processing the surface into an irregular concave-convex surface containing X planes successively connected in the longitudinal direction, the base material being a non-uniform thickness slab with non-monotonic thickness variation in the longitudinal direction, wherein the irregular concave-convex surface has a total length of L12>L1 and a width of W12=W1; X≥2;

performing grinding and polishing on one surface of each cladding material to remove surface oxide scale; and then bending each cladding material to match the corresponding irregular concave-convex surface.

12. The preparation method of the stainless steel clad plate according to claim 1, wherein the step of "performing surface treatment on at least one surface of each of the two base materials and two cladding materials" comprises:

performing grinding and polishing on one surface of each cladding material to remove surface oxide scale; and in a relatively complementary shape manner, performing milling and grinding processing on one surface of the two base materials, processing the surface into a transverse inclined surface with a length of L11=L1 and a width of W11>W1, the base material being a non-uniform thickness slab with gradually varying thickness in the transverse direction, or processing the surface into a longitudinal inclined surface with a length of L11>L1 and a width of W11=W1, the base material being a non-uniform thickness slab with gradually varying thickness in the longitudinal direction.

13. The preparation method of the stainless steel clad plate according to claim 1, wherein the step of "performing surface treatment on at least one surface of each of the two base materials and two cladding materials" comprises: performing grinding and polishing on one surface of each base material and each cladding material to remove surface oxide scale, after grinding and polishing, both the base materials and cladding materials are uniform thickness slabs.

14. The preparation method of the stainless steel clad plate according to claim 1, wherein in the "the cladding material is placed centrally relative to the base material", the distance from the side edge of the cladding material to the corresponding side edge of the base material in the transverse direction is half of the width difference between the contact surfaces of the cladding material and base material, and the distance from the side edge of the cladding material to the corresponding side edge of the base material in the longitudinal direction is half of the length difference between the contact surfaces of the cladding material and base material.

15. A stainless steel clad plate, wherein the flatness deviation of the clad plate is ≤3mm/m, the bonding ratio of the clad interface is 100%, and the shear strength is ≥300MPa.

16. The stainless steel clad plate according to claim 15, wherein the flatness deviation of the clad plate is ≤2mm/m, and the shear strength is ≥360MPa.

17. The stainless steel clad plate according to claim 15, wherein the impact energy at 0°C is ≥240J, the impact energy at -20°C is ≥200J, and the impact energy at -40°C is ≥150J.

18. The stainless steel clad plate according to claim 15, wherein the Vickers hardness difference in the thickness direction of the base layer of the clad plate is ≤10, the strength difference between the head, middle and tail is ≤40MPa, and the strength difference across the entire plate is ≤40MPa.

19. The stainless steel clad plate according to claim 15, wherein the clad plate is a uniform thickness plate with a total thickness of 5~55mm, comprising a base layer with a thickness of 4~45mm and a cladding layer with a thickness of 1~10mm.

20. The stainless steel clad plate according to claim 15, wherein the clad plate comprises a uniform thickness cladding layer and a non-uniform thickness base layer, wherein the thickness of the cladding layer is 1~10mm;
the base layer has non-monotonic thickness variation in the transverse direction or longitudinal direction, its composite surface comprises an irregular concave-convex surface containing X planes successively connected in the transverse direction; or, the base layer has monotonically varying thickness in the transverse direction or longitudinal direction, its composite surface is an inclined surface.

Fig. 1a

Fig. 1b

p1c

p1c0

11c

p3c

21c

p5c

p6c

22c

p4c

12c

p2c0   p2c

L1

**Fig. 1c**

Fig. 1d

*(A)*

*p1e*

*11e*

*p3e*

*21e*

*p5e*

*22e*

*p6e*

*p4e*

*12e*

*p2e*

L1

*(B)*

*p1e0*

*11e*

*21e*

*22e*

*12e*

*p2e0*

**Fig. 1e**

*p1a*    *30a*

*11a*

*p3a*

*40a*

*50a*

*50a*

*40a*

*p4a*

*12a*

*p2a*

**Fig. 2a**

Fig. 2b

Fig. 2c

Fig. 2d

*p1e0*    *30e*    *11e*    *40e*    *50e*    *12e*    *p2e0*

Fig. 2e

Heating 1

Rolling 1

Intermittent cooling

Warm straightening

Stacked cooling

Cooling bed

Fig. 3a

Fig. 3b

```
┌──────────────────┐
│    Heating 3     │
└──────────────────┘
         │
         ▼
┌──────────────────┐
│    Rolling 3     │
└──────────────────┘
         │
         ▼
┌──────────────────┐
│   Intermittent   │
│     cooling      │
└──────────────────┘
         │
         ▼
┌──────────────────┐
│      Warm        │
│  straightening   │
└──────────────────┘
         │
         ▼
┌──────────────────┐
│     Stacked      │
│     cooling      │
└──────────────────┘
         │
         ▼
┌──────────────────┐
│   Cooling bed    │
└──────────────────┘
```

**Fig. 3c**

*21a*

*11a*

*22a*

*12a*

**Fig. 4a**

**Fig. 4b**

**Fig. 4c**

**Fig. 4d**

**Fig. 4e**

## INTERNATIONAL SEARCH REPORT

| International application No. |
| --- |
| **PCT/CN2023/111060** |

| A. | CLASSIFICATION OF SUBJECT MATTER |
| --- | --- |

B21B1/38(2006.01)i; B21B1/00(2006.01)i; B21B47/02(2006.01)i; B21B47/00(2006.01)i; B32B15/18(2006.01)i; B32B15/01(2006.01)i; B32B15/00(2006.01)i; B21C37/02(2006.01)i; B21C37/00(2006.01)i

According to International Patent Classification (IPC) or to both national classification and IPC

| B. | FIELDS SEARCHED |
| --- | --- |

Minimum documentation searched (classification system followed by classification symbols)

IPC: B21B1/-; B21B47/-; B32B15/-; B21C37/-

Documentation searched other than minimum documentation to the extent that such documents are included in the fields searched

Electronic data base consulted during the international search (name of data base and, where practicable, search terms used)

CNABS, CNTXT, VEN, DWPI, ENTXT, CNKI: 沙钢钢铁研究院, 宏昌钢板, 复合板, 基板, 基层, 基材, 复层, 复板, 覆材, 复材, 覆层, 覆板, 不平度, 平坦度, 结合率, 剪切强度, 真空, 凹凸, 凹陷, 凹面, 凸面, 凸起, 突起, 楔面, 斜面, 轧制, 粗轧, 精轧, 堆冷, 间断, 交叉, 间隔, 冷床, 冷却, 压平, 力, 冲击, clad+, base, flatness, shear strength, vacuum, void, depression, protrusion, projection, wedge, bevel, inclin+, slope, roll+, heap, cool, interval, discontinu+, straighten, force, impact

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116099875 A (JIANGSU SHAGANG INSTITUTE OF RESEARCH OF IRON AND STEEL et al.) 12 May 2023 (2023-05-12)<br>description, paragraphs 27-152 | 1-20 |
| PX | CN 116373406 A (ZHANGJIAGANG HONGCHANG STEEL PLATE CO., LTD. et al.) 04 July 2023 (2023-07-04)<br>description, paragraphs 79-231 | 15-16, 19-20 |
| PX | CN 116001380 A (ZHANGJIAGANG HONGCHANG STEEL PLATE CO., LTD. et al.) 25 April 2023 (2023-04-25)<br>description, paragraphs 78-220 | 15-16, 19-20 |
| PX | CN 116274361 A (JIANGSU SHAGANG INSTITUTE OF RESEARCH OF IRON AND STEEL et al.) 23 June 2023 (2023-06-23)<br>description, paragraphs 71-277 | 15-16, 19-20 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 November 2023** | **28 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/111060** |

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116373428 A (JIANGSU SHAGANG INSTITUTE OF RESEARCH OF IRON AND STEEL et al.) 04 July 2023 (2023-07-04) description, paragraphs 39-149 | 15-19 |
| PX | CN 116330763 A (ZHANGJIAGANG HONGCHANG STEEL PLATE CO., LTD. et al.) 27 June 2023 (2023-06-27) description, paragraphs 39-137 | 15-19 |
| PX | CN 116351871 A (JIANGSU SHAGANG INSTITUTE OF RESEARCH OF IRON AND STEEL et al.) 30 June 2023 (2023-06-30) description, paragraphs 45-154 | 15-19 |
| PX | CN 116159861 A (JIANGSU SHAGANG INSTITUTE OF RESEARCH OF IRON AND STEEL et al.) 26 May 2023 (2023-05-26) description, paragraphs 28-124 | 15-19 |
| PX | CN 116274362 A (JIANGSU SHAGANG INSTITUTE OF RESEARCH OF IRON AND STEEL et al.) 23 June 2023 (2023-06-23) description, paragraphs 45-154 | 15-19 |
| PX | CN 116160752 A (JIANGSU SHAGANG INSTITUTE OF RESEARCH OF IRON AND STEEL et al.) 26 May 2023 (2023-05-26) description, paragraphs 45-154 | 1-4, 6-20 |
| PX | CN 116445811 A (ZHANGJIAGANG HONGCHANG STEEL PLATE CO., LTD. et al.) 18 July 2023 (2023-07-18) description, paragraphs 65-210 | 15-16, 19-20 |
| PX | CN 116141773 A (ZHANGJIAGANG HONGCHANG STEEL PLATE CO., LTD. et al.) 23 May 2023 (2023-05-23) description, paragraphs 72-246 | 15-20 |
| PX | CN 116160753 A (JIANGSU SHAGANG INSTITUTE OF RESEARCH OF IRON AND STEEL et al.) 26 May 2023 (2023-05-26) description, paragraphs 20-108 | 15-16, 18-19 |
| X | CN 115287537 A (NANJING IRON & STEEL CO., LTD.) 04 November 2022 (2022-11-04) description, paragraphs 6-101 | 15-19 |
| Y | CN 115287537 A (NANJING IRON & STEEL CO., LTD.) 04 November 2022 (2022-11-04) description, paragraphs 6-101 | 20 |
| Y | US 2018304326 A1 (NISSHIN STEEL CO., LTD.) 25 October 2018 (2018-10-25) description, paragraph 53, and figures 3-4 and 6 | 20 |
| X | CN 113894402 A (WUGANG SHENZHOU HEAVY INDUSTRY CLAD METAL MATERIALS CO., LTD.) 07 January 2022 (2022-01-07) description, paragraph 63 | 15-16 |
| X | CN 114393194 A (WUYANG IRON AND STEEL CO., LTD. et al.) 26 April 2022 (2022-04-26) description, paragraphs 47-49 | 15-16 |
| A | CN 101992568 A (SICHUAN MCWELL TECHNOLOGY CO., LTD.) 30 March 2011 (2011-03-30) entire document | 1-20 |
| A | CN 103272842 A (WUHAN IRON & STEEL (GROUP) CORP.) 04 September 2013 (2013-09-04) entire document | 1-20 |
| A | CN 104441822 A (SHOUGANG CO., LTD.) 25 March 2015 (2015-03-25) entire document | 1-20 |
| A | CN 105458005 A (CHINA FIRST HEAVY INDUSTRIES CO., LTD.) 06 April 2016 (2016-04-06) entire document | 1-20 |

Form PCT/ISA/210 (second sheet) (July 2022)

## INTERNATIONAL SEARCH REPORT

International application No.

**PCT/CN2023/111060**

### C.    DOCUMENTS CONSIDERED TO BE RELEVANT

| Category* | Citation of document, with indication, where appropriate, of the relevant passages | Relevant to claim No. |
|---|---|---|
| A | CN 105478475 A (TAIYUAN UNIVERSITY OF SCIENCE AND TECHNOLOGY) 13 April 2016 (2016-04-13) entire document | 1-20 |
| A | CN 107243723 A (FENG JIAN) 13 October 2017 (2017-10-13) entire document | 1-20 |
| A | CN 108723712 A (NANJING IRON & STEEL CO., LTD.) 02 November 2018 (2018-11-02) entire document | 1-20 |
| A | CN 114192600 A (ANHUI UNIVERSITY OF TECHNOLOGY) 18 March 2022 (2022-03-18) entire document | 1-20 |
| A | CN 1431095 A (CHEN JIANMEI) 23 July 2003 (2003-07-23) entire document | 1-20 |
| A | CN 207535415 U (CENTRAL IRON & STEEL RESEARCH INSTITUTE et al.) 26 June 2018 (2018-06-26) entire document | 1-20 |
| A | JP H1058591 A (DAIDO STEEL CO., LTD.) 03 March 1998 (1998-03-03) entire document | 1-20 |
| A | WO 2019148961 A1 (NANJING IRON & STEEL CO., LTD.) 08 August 2019 (2019-08-08) entire document | 1-20 |
| A | WO 2020071343 A1 (NIPPON STEEL STAINLESS STEEL CORP.) 09 April 2020 (2020-04-09) entire document | 1-20 |

Form PCT/ISA/210 (second sheet) (July 2022)

## INTERNATIONAL SEARCH REPORT
### Information on patent family members

| International application No. |
|---|
| **PCT/CN2023/111060** |

| Patent document cited in search report | | | Publication date (day/month/year) | Patent family member(s) | | | Publication date (day/month/year) |
|---|---|---|---|---|---|---|---|
| CN | 116099875 | A | 12 May 2023 | CN | 116099875 | B | 04 July 2023 |
| CN | 116373406 | A | 04 July 2023 | None | | | |
| CN | 116001380 | A | 25 April 2023 | None | | | |
| CN | 116274361 | A | 23 June 2023 | None | | | |
| CN | 116373428 | A | 04 July 2023 | None | | | |
| CN | 116330763 | A | 27 June 2023 | None | | | |
| CN | 116351871 | A | 30 June 2023 | None | | | |
| CN | 116159861 | A | 26 May 2023 | CN | 116159861 | B | 04 July 2023 |
| CN | 116274362 | A | 23 June 2023 | None | | | |
| CN | 116160752 | A | 26 May 2023 | CN | 116160752 | B | 04 July 2023 |
| CN | 116445811 | A | 18 July 2023 | None | | | |
| CN | 116141773 | A | 23 May 2023 | None | | | |
| CN | 116160753 | A | 26 May 2023 | None | | | |
| CN | 115287537 | A | 04 November 2022 | None | | | |
| US | 2018304326 | A1 | 25 October 2018 | TW | 201726393 | A | 01 August 2017 |
| | | | | TWI | 690422 | B | 11 April 2020 |
| | | | | EP | 3363550 | A4 | 22 August 2018 |
| | | | | EP | 3363550 | A1 | 08 April 2020 |
| | | | | US | 10562084 | B2 | 18 February 2020 |
| | | | | JP | 6173619 | B1 | 02 August 2017 |
| | | | | JPWO | 2017065267 | A1 | 12 October 2017 |
| | | | | WO | 2017065267 | A1 | 20 April 2017 |
| | | | | KR | 20180045038 | A | 03 May 2018 |
| | | | | KR | 101907839 | B1 | 12 October 2018 |
| | | | | HK | 1254500 | A1 | 19 July 2019 |
| | | | | EP | 3363550 | B1 | 08 April 2020 |
| CN | 113894402 | A | 07 January 2022 | CN | 113894402 | B | 18 November 2022 |
| CN | 114393194 | A | 26 April 2022 | None | | | |
| CN | 101992568 | A | 30 March 2011 | None | | | |
| CN | 103272842 | A | 04 September 2013 | None | | | |
| CN | 104441822 | A | 25 March 2015 | None | | | |
| CN | 105458005 | A | 06 April 2016 | CN | 105458005 | B | 13 October 2017 |
| CN | 105478475 | A | 13 April 2016 | CN | 105478475 | B | 06 February 2018 |
| CN | 107243723 | A | 13 October 2017 | None | | | |
| CN | 108723712 | A | 02 November 2018 | None | | | |
| CN | 114192600 | A | 18 March 2022 | None | | | |
| CN | 1431095 | A | 23 July 2003 | CN | 1217786 | C | 07 September 2005 |
| CN | 207535415 | U | 26 June 2018 | None | | | |
| JP | H1058591 | A | 03 March 1998 | None | | | |
| WO | 2019148961 | A1 | 08 August 2019 | KR | 20200105522 | A | 07 September 2020 |
| | | | | KR | 102225672 | B1 | 12 March 2021 |
| | | | | CN | 108326516 | A | 27 July 2018 |
| | | | | CN | 108326516 | B | 18 August 2020 |
| WO | 2020071343 | A1 | 09 April 2020 | KR | 20210066888 | A | 07 June 2021 |
| | | | | KR | 102525415 | B1 | 25 April 2023 |
| | | | | EP | 3862456 | A1 | 11 August 2021 |

Form PCT/ISA/210 (patent family annex) (July 2022)

## INTERNATIONAL SEARCH REPORT
### Information on patent family members

International application No.

**PCT/CN2023/111060**

| Patent document cited in search report | Publication date (day/month/year) | Patent family member(s) | | Publication date (day/month/year) |
|---|---|---|---|---|
| | | EP | 3862456 A4 | 03 August 2022 |
| | | JPWO | 2020071343 A1 | 24 September 2021 |
| | | JP | 7158491 B2 | 21 October 2022 |
| | | CN | 112789364 A | 11 May 2021 |
| | | CN | 112789364 B | 12 July 2022 |

**REFERENCES CITED IN THE DESCRIPTION**

**Patent documents cited in the description**

- CN 110064835 A